(19) Europäisches Patentamt

European Patent Office

Office européen des brevets

(11) **EP 4 707 028 A1**

## (12) EUROPEAN PATENT APPLICATION

(43) Date of publication:
**11.03.2026 Bulletin 2026/11**

(21) Application number: **24198770.0**

(22) Date of filing: **05.09.2024**

(51) International Patent Classification (IPC):
*B60L 1/00* (2006.01)    *B60L 53/12* (2019.01)
*B60L 53/62* (2019.01)    *B60L 53/63* (2019.01)
*B60L 53/66* (2019.01)    *B60L 53/67* (2019.01)
*B60L 53/68* (2019.01)    *B60L 55/00* (2019.01)
*H02J 1/14* (2026.01)    *H02J 3/14* (2026.01)

(52) Cooperative Patent Classification (CPC):
**B60L 55/00; B60L 1/006; B60L 53/12; B60L 53/62;
B60L 53/63; B60L 53/66; B60L 53/67; B60L 53/68;
H02J 1/14; H02J 3/14;** B60L 2260/46;
B60L 2260/50; H02J 2105/50

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **WiTricity AI Tech, LLC
Midway, GA 31320 (US)**

(72) Inventor: **MARKMANN, Sergej
Midway, 31320 (US)**

(74) Representative: **HG Law International LLP
26-28 Bedford Row
London WC1R 4HE (GB)**

(54) **SYSTEMS AND METHODS FOR MANAGING AN ELECTRICAL GRID**

(57)    Systems and methods are described herein for balancing power transfer between electric vehicles and an electrical grid. The system comprises a plurality of power transfer systems located within a region, each power transfer system configured to enable the transfer of power between an electric vehicle and the electrical grid; a memory storing a model of power transfer data obtained from the plurality of power transfer systems; and a processor configured to use the model to predict, based on the power transfer data, a power status, for example a power or power surface density or an energy or energy surface density, of the region at a time instance; wherein the processor is further configured to set a direction of net power transfer of at least one of the plurality of power transfer systems based on the predicted power status of the region at the time instance.

**Description**

TECHNICAL FIELD

This application relates to managing energy distribution of an electrical grid using cloud-based or edge computing, and in particular, but not exclusively, to managing energy distribution of an electrical grid using cloud-based or edge computing-based stochastic analytics of a network of wireless electric vehicle charging stations.

BACKGROUND

Electrical energy management in the modern electrical grid involves balancing supply with fluctuating demand, and can involve storing excess energy during periods of surplus, or accessing alternative power sources during a shortage. Grid operators can adjust the supply of electricity to balance demand by adjusting the output of power plants and/or toggling grid access on and off as necessary. This dynamic balancing act aims to maintain optimal stability and efficiency of the electrical grid.

Calculating real-time supply and demand accurately is a critical yet challenging task, especially given common geographic and temporal variations in energy usage and production. Factors such as sudden changes in weather or unexpected equipment failures can create discrepancies between forecasted and actual demand. These challenges are compounded in larger regions where a single grid might serve diverse areas with different energy profiles and needs.

Large-scale energy storage solutions like pumped hydroelectric storage and compressed air energy storage can require significant initial investments and extensive modifications to existing infrastructure. These systems often necessitate the construction of new facilities or the repurposing of geological formations, which can be costly and time-consuming. Moreover, these projects may face regulatory hurdles, environmental concerns, and community opposition, all of which can delay or even prevent their implementation.

These storage methods, while effective for long-term energy storage, are not always capable of responding quickly to fluctuations in demand, with response times for energy release tending to be slow compared to other approaches, and can therefore be unsuited to regions expecting large sudden or frequent fluctuations in supply or demand, such as regions having a large contribution from renewable energy sources.

The integration of more flexible storage technologies may be crucial for improved energy distribution within and/or across electrical grids as the grids accommodate more renewable energy sources. Energy storage not only provides a buffer to manage variability and ensure reliability but also optimizes the energy production from renewable sources by mitigating issues related to their intermittent nature.

Ensuring effective distribution could, however, require prohibitive resource and time investment in infrastructure changes, and ongoing challenges in performing real-time computation of supply and demand can present potential issues to such solutions.

For enhancing the scalability of the modern grid, it may be important to understand and monitor the potential energy storage landscape. As the grid evolves, the significance of energy storage is expected to increase, highlighting its role as a fundamental component in the transition to a more sustainable and resilient energy infrastructure. It is therefore desirable to provide quicker, more scalable, and more adaptable storage solutions for addressing both the immediate and long-term stability of the modern energy grid, while avoiding issues hindering uptake at the scale required to observe the desired impact.

SUMMARY

Battery technologies can act to provide a flexible electrical energy access and storage solution for balancing an electrical grid. Batteries can more effectively distribute energy and may therefore be less susceptible to localized faults, and can be capable of rapid storage and discharge, making them ideal for immediate response to demand surges or indeed power surpluses. Batteries can be deployed virtually anywhere, including urban settings where space is limited, and can be connected directly to the grid to provide instant power when needed.

Electrical grid balancing may be impacted by scenarios that lead to either a power deficit or a power oversupply. Each situation may have specific causes contributing to these imbalances, and which could consequently affect the operation and efficiency of the electrical grid.

A power deficit can often arise from increased demand, such as due to pressures resulting from weather events like heatwaves or cold snaps, which can dramatically raise power consumption, and may raise the consumption beyond a current grid capability. The often unpredictable nature of renewable power outputs, such as those from solar and wind sources, can also lead to sudden decreases in power production, and this can again be driven by weather changes. Various other scenarios such as unexpected plant failures, power line failures, and maintenance issues, can also act to disrupt power distribution across the grid.

Conversely, power oversupply can also occur in several scenarios, such as unexpected overproduction from renewables, particularly when wind and solar installations generate more power than needed during periods of low demand. Rapid drops in electricity usage due to changes in consumer behavior or industrial demand can also lead to overproduction, yielding excess power.

Managing these challenges requires robust strategies such as real-time demand response, and flexible power storage solutions, which might include battery technologies. Providing a dedicated battery solution may, however, present challenges at the required scale, particularly for large regions of high expected power consumption. It may therefore be beneficial to make use of existing battery availability where possible. In particular, as many regions push to meet green energy targets, electric vehicle (EV) ownership, and consequent installation of EV battery charging stations, is becoming more widespread. This increasingly dense EV battery charging infrastructure provides more ready access between an electrical grid and electrical power storage capacity in the form of EV batteries.

Due to the dual concerns of the effects of power oversupply and power deficit, in order to provide optimum grid balancing such a solution should be capable of both receiving surplus power from an electrical grid during periods of a power surplus, and of contributing power to the grid during periods of power deficit. In order for such EV charging installations to provide a suitable contributor to electrical grid balancing, there may therefore be a need for such charging installations to comprise both grid to vehicle (G2V) and vehicle to grid (V2G) power transfer capability.

Such EV charging installations may contribute to aiding grid balancing during periods when an EV is connected and available for receiving or providing electrical power. Once the spatial and temporal power requirements for a region are understood, it may be required to understand the capabilities of the EV charging installations, the EV and the associated batteries, in order to ensure that appropriate demands are made of these devices during their contribution to electrical grid balancing. Such an understanding may currently require a real-time determination of spatial and temporal distribution of EV charging installations having EVs connected thereto, along with a real-time determination of spatial and temporal distribution of the battery characteristics of the batteries thereof. This does, however, introduce numerous parameters of importance to be considered when determining an availability of power access or storage during periods of potential grid imbalance, which can number in the millions. These parameters might for example include individual battery parameters such as: state of charge; state of health; state of function; voltage; current; temperature; environmental temperature; internal battery resistance; fault detection and indicators of diagnostic status, among many others. When considering regions having, in some cases, millions of EV charging installations, this may introduce parameters in the order of millions or billions required for consideration of power access and storage availability. Changes in power supply and demand over time may require a close monitoring of both the spatial and temporal variability in these parameters across a region. The computational resources required for performing such continuous real-time receipt, processing and analyzing of these parameters on minute- or sub-minute time scales, in order to keep a grid balance between power generation and consumption, may be impractical.

The present disclosure therefore provides systems and methods for balancing power transfer between EV batteries and an electrical grid, by way of power transfer systems, to manage electrical grid balancing in a region. In particular, the present systems and methods make use of prior captured power transfer data within a region to predict a power status of the region at a particular time instance, which may comprise at least one of: a power surface density of the region, a power of the region, an energy surface density of the region, or an energy of the region, at the particular time instance, which may thereby avoid the computational resource intensive, and time intensive, task of performing continuous real-time monitoring of power and power surface density, and energy and energy surface density, for the region.

In accordance with one aspect of the present disclosure, there is provided an electrical grid monitoring system for balancing power transfer between electric vehicles and an electrical grid, the system comprising: at least one power transfer system located within a region, the, or each, power transfer system configured to enable the transfer of power between a battery of an electric vehicle and the electrical grid; a memory storing a model of power transfer data obtained from the, or each, power transfer system; and a processor configured to use the model to predict, based on the power transfer data, a power status of the region at a time instance; wherein the processor is further configured to set a direction of net power transfer of at least one of said power transfer systems based on the predicted power status of the region at the time instance.

In some examples, the power transfer system is a plurality of power transfer systems.

In some examples, the power transfer system comprises the processor. In some examples, the processor comprises a power transfer system-side processor element and a remote processor element. In some examples the memory comprises a power transfer system-side memory element storing a model of power transfer data obtained from the power transfer system, and optionally a remote memory element storing a model of power transfer data obtained from a plurality of said power transfer systems. In some examples the power transfer system-side processor element is configured to predict, using the model stored on the power transfer system-side memory element, and based on the respective power transfer data, a said power status of the power transfer system, for example a said power status at the time instance. In some examples, the power transfer system-side processor may be configured to communicate the power status of the power transfer system to the remote processor element, and wherein the remote processor element is configured to predict (optionally using the model stored on the remote memory element and based on the power transfer data obtained from the plurality of power transfer systems), based on the power status of the power transfer system, the power status of the region. In such examples, the remote processor element may be configured to receive the power status of the power transfer system from a plurality of said power transfer systems located within the region, and may be configured to combine the plurality of locally-determined power statuses to determine the power status of the region. In some examples the prediction of the power status of the region may therefore comprise a combination of individual power transfer system-side predictions of local power statuses, or in some examples the power transfer system-side predictions of local power statuses may be used by the remote processor element to perform a separate prediction of the power status of the region using the power transfer system-side predictions of local power statuses communicated thereto.

The term "electrical grid" refers to the interconnected network that delivers electricity from producers to consumers within a specific geographic area. Such a network can typically include power generation means, such as power stations or renewable energy sources, power transmission lines, and can include substations, and distribution lines. It will be understood that the electrical grid's primary function is to ensure a reliable and efficient supply of electricity to meet the fluctuating demand of a variety of consumers, such as residential, commercial, and industrial users, aiming to balance generation and consumption in real-time, and maintaining stable voltage and frequency levels. The electrical grid may facilitate the transport of electricity over long distances, integrating various sources of power including renewable energy sources, and typically incorporates mechanisms for monitoring, controlling, and protecting the electrical grid infrastructure. In some examples the electrical grid may be operably connected to one or more adjacent electrical grids and configured to receive electrical power from, or provide electrical power to, the adjacent grids.

It will be understood that the term "power transfer" in the context of the present disclosure refers to any suitable transfer of power from or to an electric vehicle battery, and may include transfer from the electric vehicle battery to an electrical grid, from an electrical grid to the electric vehicle battery, or from the electric vehicle battery direct to any suitable power consumer, such as a home. Such a process may encompasses any one or more of the components and stages involved in the power transfer, for example the conversion between alternating current (AC) of the electrical grid to direct current (DC) of the battery, the regulation of voltage and the current to ensure safe and efficient transfer, and the interaction between electrical connections, whether physical or wireless, between a power transfer system and the electric vehicle, along with any communication channel operating between the power transfer system and the electric vehicle. A power transfer system in the context of the present disclosure is therefore any system suitable for facilitating such aspects of the power transfer process, and may be configured for either a physical or wireless connection with the electric vehicle, and may be further configured for wired or wireless communication with the electrical vehicle.

In the context of the present disclosure, the region may be any suitable geographical area operating at least a portion of an electrical grid between power sources and power consumers as discussed herein, and may be any geographical region such as a residence, a town, a city, a county, or a country.

In some examples, a power transfer system may comprise a ground unit connected to an electrical grid, and a vehicle unit connected to a vehicle battery. The term "power transfer system" as used herein will be understood to mean "at least the ground unit of the power transfer system". It will therefore be understood that the term "power transfer system" does not exclusively include the vehicle unit of a power transfer system, and may instead refer to the ground unit of the power transfer system.

The term "a memory storing a model" will be understood to be any suitable memory, or any suitable combination of memory units, accessible by the processor either locally or remotely thereto, for example by way of a remote server. In examples wherein the memory comprises a combination of more than one memory unit, each memory unit may comprise at least part of the model, which may in some cases be partitioned across multiple memory units for access by the processor, either individually or in parallel. It will be appreciated that such memory units may be local or may be distributed across remote devices in any combination thereof. The power transfer data modelled by the model may be any suitable data which indicates usage or activity of a power transfer system for the purpose of engagement with an electric vehicle. In particular the power transfer data may be configured to indicate: one or more time instances when a power transfer system of the plurality of power transfer systems is either engaged with, or not engaged with, an electric vehicle; and a battery characteristic of the electric vehicle during the time instances. The model may be any suitable model, or combination of models, configured to predict a power status of the region at the time instance when modelling the power transfer data. In some examples, the model may comprise a model or multiple models, wherein the model or models may be based on any suitable publicly available and non-publicly available data such as the power transfer data described herein. In some examples, since the electrical grid infrastructure may be largely unchanged over a period of time, modeling the power transfer data (which may be any suitable data as described herein, and may include weather-related data as described) may enable the present systems and methods to predict the power status at a particular time instance to inform a direction of net power transfer of a plurality of power transfer systems in order to support grid balancing. In some embodiments, the model may be a probabilistic, stochastic or empirical model. In some examples, the model may be a machine learning model trained on the power transfer data. The machine learning model may in some examples be a probabilistic, stochastic or empirical machine learning model.

The predicted "power status" will be understood to mean any suitable predicted metric or indicator of: a state of power availability within the electrical grid of the region, and may for example comprise at least one of a metric or indicator of an amount of power provided to the electrical grid of the region, or an amount of power consumed from the electrical grid of the region, any combination thereof; or a state of energy storage within the region, and may for example comprise at least one of a metric or indicator of an amount of energy storage capacity available for accepting surplus energy, or an amount of stored energy available provision to the electrical grid of the region, or any combination thereof. In some examples, predicting the power status of the region at the time instance may comprise predicting, based on the power transfer data, at least one of: a power surface density of the region at the time instance, a power of the region at the time instance, an energy surface density of the region at the time instance or an energy of the region at the time instance. Predicting the power of the region may in some examples comprise predicting a power of a sub-region within the region. Predicting the energy of the region may in some examples comprise predicting an energy of a sub-region within the region. Said predicting the power or the energy may be based on a power surface density or an energy surface density of the region at the time instance, respectively.

The term "power surface density", which may be otherwise referred to as "surface power density", of the region will be understood as referring to at least one of: the amount of electrical power for provision to a power receiver, for example for input into the electrical grid, from electric vehicle batteries by way of a power transfer system, per unit area within the region; or the amount of electrical power available for transfer to electric vehicle batteries from the electrical grid by way of a power transfer system, per unit area within the region. The predicted power status may, in some examples, be based on a direction of power transfer of one or more of the plurality of power transfer systems, for example a direction of power transfer of the one or more power transfer systems at the time instance. For example, when the direction of power transfer is from electrical grid to vehicle (G2V), the power surface density of the region may comprise at least the amount of electrical power available for transfer to electric vehicle batteries from the electrical grid by way of a power transfer system, per unit area within the region. Contrastingly, when the direction of power transfer is from vehicle to a power receiver (V2X, for example the electrical grid, V2G, or the home, V2H), the power surface density of the region may comprise at least the amount of electrical power available for provision to the power receiver from electric vehicle batteries by way of a power transfer system, per unit area within the region. The power surface density may be calculated in any suitable manner, for example by integrating the power surface density at multiple areas of interest across the region at the time instance, depending on a direction of power transfer, such as in accordance with one of the following:

$$P_{V2X}(t) = \int P_{surface,V2X}(t)\, dA_{V2X} \; ; \; P_{G2V}(t) = \int P_{surface,G2V}(t)\, dA_{G2V}$$

in which, $P_{surface,V2X}(t)$ represents the power surface density of the entire region. By integrating $P_{surface,v2x}(t)$ over the area of interest $A_{V2G}$, this provides a power of interest $P_{V2X}(t)$ at the time instance, t, when the direction of net power transfer is V2X. $P_{surface,G2V}(t)$ represents the power surface density of the entire region. By integrating $P_{surface,G2V}(t)$ over the area of interest $A_{G2V}$ we obtain a power of interest at the time instance, t, when the direction of net power transfer is G2V. The power surface density may, for example, be predicted as a value of Watts per square meter ($W/m^2$). Any suitable value or units of measurement will be appreciated. The power surface density data obtained over a period of time may be useful in training a model to predict a value or change of the power surface density in a day to day operation. For example, if data is obtained indicating a power surface density in a particular region over a time period of a year, this data may be used by a model to predict values and changes in power surface density at any particular time of the year in the future. Such data may in some example be useful in combination with weather forecast data, and may be used, for example, in predicting upcoming power surpluses or shortfalls which may require energy trading. For example, weather forecast data may be used to forecast or predict availability from renewable energy sources, which may be influenced by weather conditions. Therefore combining the information of predicted power availability with predicted renewable energy availability may in some cases aid grid balancing.

The term "energy surface density", which may otherwise be referred to as "surface energy density", of the region, will be understood as referring to at least one of: the amount of energy storage capacity, for example of electric vehicle batteries, available for receiving energy from the electrical grid by way of a power transfer system, per unit area within the region; or the amount of stored energy, for example within electric vehicle batteries, available for transfer to an energy receiver, for example the electrical grid, by way of a power transfer system, per unit area within the region. The energy surface density may, for example, be predicted as a value of Joules per square-meter ($J/m^2$), Watt-seconds per square meter ($Ws/m^2$), or Watt-hours per square meter ($Wh/m^2$). Any suitable value or units of measurement will be appreciated. The predicted power status may, in some examples, be based on a direction of power transfer of one or more of the plurality of power transfer systems. For example, when the direction of power transfer is from electrical grid to vehicle (G2V), the energy surface density of the region may comprise at least the amount of energy storage capacity, for example of electric vehicle batteries, available for receiving energy from the electrical grid by way of a power transfer system, per unit area within the region. Contrastingly, when the direction of power transfer is from vehicle to a power receiver (V2X, for example the electrical grid, V2G, or the home, V2H), the energy surface density of the region may comprise at least the amount of stored energy, for example within electric vehicle batteries, available for transfer to the power receiver by way of a power transfer system, per unit area within the region. The energy surface density may be calculated in any suitable manner, for example by integrating the energy surface density at multiple areas of interest across the region at the time instance, depending on a direction of power transfer, such as in accordance with one of the following:

$$E_{V2X}(t) = \int E_{surface,V2X}(t) \, dA_{V2X} \; ; \; E_{G2V}(t) = \int E_{surface,G2V}(t) \, dA_{G2V}$$

in which, $E_{V2X}(t)$ represents the energy reservoir of the region of interest $A_{V2X}$ at the time instance, t, when the power transfer direction is V2X; $E_{G2V}(t)$ represents the stored energy or energy reservoir of the region of interest $A_{G2V}$ at the time instance, t, when the direction of the power transfer is G2V; $E_{surface,V2X}(t)$ represents the energy surface density of the entire region at a time instance, t, when the direction of net power transfer is V2X; and $E_{surface,G2V}(t)$ represents the energy surface density of the entire region at the time instance, t, when the direction of net power transfer is G2V. The energy surface density may, for example, be predicted as a value of Joules per square-meter ($J/m^2$), Watt-seconds per square meter ($Ws/m^2$), or Watt-hours per square meter ($Wh/m^2$). Any suitable value or units of measurement will be appreciated. As with the power surface density data, energy surface density data obtained over a period of time may be useful in training a model to predict a value or change of the energy surface density in a day to day operation. For example, if data is obtained indicating an energy surface density in a particular region over a time period of a year, this data may be used by a model to predict values and changes in energy surface density at any particular time of the year in the future. Such data may in some examples be useful in combination with weather forecast data, and may be used, for example, in predicting upcoming stored energy reservoir, or energy storage availability, surpluses or shortfalls which may require energy trading. For example, weather forecast data may be used to forecast or predict availability from renewable energy sources, which may be influenced by weather conditions. Therefore combining the information of predicted energy storage or stored energy availability with predicted renewable energy availability may in some cases aid grid balancing.

In the context of the present disclosure it will be understood that the "direction of net power transfer" refers to a majority power transfer direction among the, optionally plurality of, power transfer systems, which may either be from the electrical grid to the vehicle (for example a battery thereof) (G2V) or from the vehicle (for example a battery thereof) to any suitable power receiver (V2X, for example the electrical grid, V2G, or the home, V2H). In some examples the direction of net power transfer may be determined by detecting, for each power transfer system of the plurality of power transfer systems, a direction of power transfer. In some examples, depending on the local electrical grid topology, it could be the case that a direction of some power transfer systems is opposite to that of other power transfer systems which may affect the majority power transfer direction. As such, in some examples the direction of power transfer for individual power transfer systems of the plurality of power transfer systems may be determined. The direction of net power transfer may determine the direction of net contribution of power transfer by, or to, the electric vehicle battery, such that electric vehicle battery storage may be used to aid electrical grid balancing, for example during time instances wherein the electrical grid comprises, or is predicted or forecast to comprise, an electrical power surplus or an electrical power deficit. The setting of the direction of net power transfer by the processor, based on the predicted power status of the region at the time instance, may thereby cause the electric vehicle battery to contribute to electrical grid balancing. The present disclosure may therefore act to leverage existing regional infrastructure changes accommodating increasing electric vehicle prevalence, such that batteries of the electric vehicles may additionally contribute to electrical grid balancing in those regions. The present disclosure may therefore provide a resource efficient mode of balancing the electrical grid, without the need for large scale additional infrastructure changes, such as using dedicated power storage solutions.

The EV battery may in some cases only act as a contributor to grid balancing when it is connected to the grid, which may only be the case when the user of the EV remembers to connect the EV to a power transfer system, such as when the EV battery requires charging. In cases wherein a physical connection is required to be made between the EV and the power transfer system, such as a plug and socket arrangement, this may therefore reduce the number of instances and length of time in which an EV may act as a contributor of power transfer from the vehicle battery to the electrical grid. In some examples, at least a subset of the plurality of power transfer systems are wireless power transfer (WPT) systems configured to transfer the power wirelessly between the electric vehicle, for example a battery of the electric vehicle, and the electrical grid. Such WPT systems may not require a physical connection between the EV and the power transfer system such that easier connection between the EV and the power transfer system is facilitated. Such WPTs may therefore enable more regular, and longer duration, access between an EV battery and an electrical grid for wireless power transfer. In some examples, the WPT system or the EV comprises a position determination system, or a position guidance system, the position determination or position guidance system configured to indicate when an EV is positioned relative to the WPT such that wireless power transfer between the EV and the WPT may occur. The inclusion of such a positioning system may, in such examples, further increase the availability of power transfer between an EV and an electrical grid.

In some examples the power transfer system may be configured to communicate with an EV or an EV battery by way of any suitable communication channel, which may for example be a wireless communication channel. The power transfer system may be configured to, by way of the communication channel, receive the power transfer data from the EV or the EV battery. The power transfer data may therefore comprise any data associated with the EV, the EV battery, the power transfer system, the engagement of the EV, or the EV battery, with the power transfer system, or the engagement of the power transfer system with the electrical grid or any other suitable power receiver such as a home. In some examples, the power transfer data may comprise any suitable power production and power consumption data obtainable using one or more sensors configured to detect power production from one or more power providers, contribution of said power to the electrical grid, or power consumption from the grid by one or more power consumers. In some examples, the power transfer data may comprise any suitable environmental data such as temperature or weather-related data, for example in cases where power production and consumption from the electrical grid may comprise a weather dependence. In some examples, the power transfer data comprises, for each power transfer system, at least one selected from the group of: a location of the power transfer system in the region; a time at which the electric vehicle is engaged with the power transfer system; a duration for which the electric vehicle is engaged with the power transfer system; a duration of charging of the battery of the electric vehicle; a battery characteristic of the battery of the electric vehicle; an environmental characteristic of the power transfer system, such as for example, an environmental temperature or an environmental pressure. For example, trends or patterns, such as time-dependent trends, in such in power transfer data may be learned by the machine learning model and may for example inform on the likelihood of a power transfer system being engaged with an EV battery for providing or receiving power transfer via the power transfer system at a particular time instance. Such modelled behavior over the plurality of power transfer systems within the region may thereby enable the processor to use the model to predict the available distribution of electrical power contribution or storage at the time instance, and therefore the power status (for example comprising a power surface density or an energy surface density) of the region at the time instance. For example, patterns or trends in when and for how long a particular power transfer system is engaged with a corresponding electric vehicle, along with patterns or trends in the battery capacity of the electric vehicle, can aid the processor in predicting the power status of the region at the time instance.

Any suitable battery characteristic will be appreciated which may indicate engagement therewith by a power transfer system along with an ability of the battery to provide or store electrical power via the power transfer system. In some examples, the battery characteristic may one or more characteristics selected from the group: a battery type; a battery manufacturer; a battery model number; a battery digital twin; a battery charge method; a wireless power transfer operational range; a state of charge; a state of health; a state of function; a capacity; a voltage; a current; a temperature; a pressure; an internal resistance; a threshold charging current; a threshold charging voltage; a threshold charging impedance; a threshold charging resistance; a threshold charging rate; a C-rate; an E-rate; a battery energy density; a battery power density; a battery cycle life; a fault detection; a diagnostic status. It will be understood that a threshold, such as a threshold charging current, a threshold charging voltage, a threshold charging impedance, a threshold charging resistance, and a threshold charging rate, may comprise one or more of an upper threshold and a lower threshold. It will also be understood that the threshold charging rate may be any suitable charging rate, such as a threshold charging rate of current or voltage. Any time-dependent patterns in battery characteristics such as battery capacity and diagnostic, fault-detection, or state of health and function indicators may be learned by the machine learning model and may for example inform on the ability of the battery to engage with the power transfer system in order to provide or receive power transfer via the power transfer system at a particular time instance. Modelled patterns or trends in battery identification data, such as a battery type, a battery manufacturer, a battery model number, a battery charge method, or a wireless power transfer operational range may inform expectations on charging protocols and may for example increase a confidence in a determined or predicted battery characteristic based on known manufacturer specifications. A received or learned digital twin of the battery may additionally improve confidence in determining or predicting battery characteristics. Modelled patterns or trends, or those statistically derived or deduced, in power transfer characteristics of the battery such as a voltage, a current, a temperature, a pressure, an internal resistance, a threshold charging current, a threshold charging voltage, a threshold charging impedance, a threshold charging resistance, a threshold charging rate, a C-rate, an E-rate, a battery energy density, and a battery power density, may act to improve confidence in determining or predicting power transfer capability of the battery at the time instance. Such modelled behavior over a plurality of batteries within the region may thereby enable the processor to use the model to predict more accurately the power status (for example comprising a power surface density or an energy surface density) of the region at the time instance.

In some examples, the direction of net power transfer is one selected from: electrical grid to vehicle (G2V) transfer wherein power is transferred from the electrical grid to the battery of the vehicle by way of the power transfer system; vehicle to external power receiver (V2X) transfer wherein power is transferred from the battery of the vehicle to an external power receiver by way of the power transfer system. As such, the power transfer system may be configured to transfer power to or from the electric vehicle battery, wherein the transfer from the electric vehicle battery may be to any suitable external power receiver, and may include power transfer from the vehicle battery to the electrical grid (V2G), or direct to an energy consumer such as to a home (V2H). In some examples, the processor may be configured to determine an optimal manner in which to achieve electrical grid balancing, and in examples wherein the electrical grid comprises an power undersupply such that power consumption from the electrical grid is greater than power contribution, the processor may set, based on the predicted power status (for example comprising a power surface density or an energy surface density), the direction of power transfer of one or more of the plurality of power transfer systems to V2H. In such examples, electric vehicle batteries may be used as personal home energy storage for use during the periods of power undersupply or power outage.

The processor may in some examples be configured to determine an electrical grid oversupply or undersupply, which may be used to set the direction of power transfer in response thereto. In some examples, the system further comprises: one or more power supply sensors configured to detect an amount of power supplied to the electrical grid; and one or more power consumption sensors configured to detect an amount of power consumed from the electrical grid; and wherein the processor is further configured to determine, based on the detected amount of power supplied to the electrical grid, and the detected amount of power consumed from the electrical grid, a net power availability of the electrical grid. Examples will be appreciated wherein one or more of the power supply sensors, and one or more of the power consumption sensors, are not part of the system, but wherein the processor is configured to receive power supply data from the one or more power supply sensors and power consumption data from the one or more power consumption sensors. In such examples, the processor may be configured to determine, based on the received power supply data, an amount of power supplied to the electrical grid, and further configured to determine, based on the received power consumption data, an amount of power consumed from the electrical grid. In such examples, the processor may be configured to determine, based on the determined amount of power supplied to the electrical grid, and the determined amount of power consumed from the electrical grid, a net power availability of the electrical grid. Examples will be appreciated wherein the net power availability of the electrical grid is determined remote to the system, such as by a computing device of an operator of the electrical grid, and therefore in some examples, the processor may be configured to receive the net power availability of the electrical grid.

The term "net power availability of the electrical grid" will be understood as referring to the approximate difference between the amount of power supplied to the electrical grid, for example by electrical power generators such as power plants or renewable energy sources, and the amount of power consumed from the electrical grid, for example by industrial, commercial and residential power consumers. In order to maintain grid balancing, the net power availability of the grid may be maintained at or approximately zero, such that all power contributed to the grid by power generators is consumed by power consumers. In instances wherein the net power availability of the grid is non-zero, the resulting grid power surplus or grid power deficit may lead to grid imbalance. The determination or receipt of the net grid power availability may enable any surplus or deficit to be redistributed, for example to or from electric vehicle batteries by way of a power transfer system as described herein. The net power availability will be understood to not exceed the grid capacity. In some examples a known grid capacity may be used by the processor to determine the net power availability of the grid. In some examples, the processor may receive, or determine based on the known grid capacity, a threshold minimum power availability, which may in some examples define a minimum net grid power availability beyond which the processor is configured to set the direction of net power transfer of power transfer systems within the plurality of power transfer systems to V2X, for example V2G.

In some examples, when the net grid power availability is positive, the processor may be configured to set the direction of power transfer of at least one of the plurality of power transfer systems to G2V. As such, when the electrical grid experiences an electrical power oversupply such that power generation is greater than power consumption, the machine learning model may be used by the processor to predict the availability of energy storage capacity within electric vehicle batteries, for example using the predicted energy surface density, the predicted storage energy, and therefore the predicted energy storage capacity, may then be allocated to receive surplus power from the electrical grid by way of the corresponding power transfer system. In some examples, when the net grid power availability is negative, the processor may be configured to set the direction of power transfer of at least one of the plurality of power transfer systems to V2X, for example to V2G. As such, when the electrical grid experiences an electrical power undersupply such that power generation is less than power consumption, the machine learning model may be used by the processor to predict the availability of stored energy within electric vehicle batteries, for example using the predicted energy surface density, the predicted stored energy may then be allocated for transfer directly to an electrical power consumer such as a home, or to the electrical grid, by way of the corresponding power transfer system.

In some examples, the setting of the direction of net power transfer of at least one of the plurality of power transfer systems by the processor may further comprise detecting that the power transfer system of the plurality of power transfer systems is configured for control by the processor. In some examples, the detection may comprise identifying a control authorization of a power transfer system of the plurality of power transfer systems. In some examples the control authorization may be selectable by a control authorization selector, the control authorization selector comprising at least one of: an operator of a vehicle; an operator of the power transfer system; an operator of the electrical grid monitoring system. In some examples, the setting of the direction of power transfer by the processor may further comprise, in response to detecting the control authorization, setting the direction of power transfer according to a predefined power transfer contract. In some examples, the control authorization selector, for example an operator or user of a vehicle or a power transfer system, may opt-in for permitting control of the direction of power transfer of the power transfer system by the processor. The selectable (for example user-selectable) control authorization may, for example, be selected by way of an energy trading platform, setting terms of a contract between the control authorization selector and a power transfer provider or receiver (for example an electrical grid operator), for the setting of the direction of power transfer. The predefined power transfer contract may therefore determine further communications in response to the setting of the net power transfer direction, for example associated with a transaction between the control authorization selector (for example the user or operator of the vehicle or power transfer system) and the power transfer provider or receiver (for example the electrical grid operator).

In some examples, the setting of the direction of net power transfer of at least one of the plurality of power transfer systems by the processor may further comprise determining or detecting, by the processor, one or more battery characteristics of an electric vehicle battery engaged with the at least one power transfer system. In some examples, the battery characteristic may be an available battery capacity or a stored battery energy, wherein the processor may be configured to set the direction of power transfer only when a specific threshold of the battery characteristic is met, such as a threshold battery capacity or a threshold stored battery energy. In such examples therefore, the processor may be configured to set the direction of power transfer to make use of a battery for G2V power transfer when the battery capacity threshold is met, or for V2X power transfer when the stored battery energy threshold is met. In some examples, the threshold of the battery characteristic may be selectable by an operator of one or more of: the vehicle; the power transfer system; the electrical grid. In some examples, the threshold of the battery characteristic may be selectable by a manufacturer of one or more of: the vehicle; the vehicle battery; the power transfer system. In some examples, power transfer systems in the region, or a subregion thereof, may be ranked by the processor based on the detected or determined battery characteristic, wherein the setting of the direction of power transfer by the processor is performed based on said ranking. In such examples, power transfer systems engaged with vehicle batteries having higher capacity or stored energy may be prioritized over those with lower capacity or stored energy. Any suitable battery characteristic will be appreciated as suitable for use in setting the direction of power transfer by the processor. For example, the battery characteristic may include a frequency-of-use metric defining the number of time instances, or the duration, in which the power transfer system or battery has been engaged for power transfer to or from the grid, for example in a predefined time period (such as per day, per week, or per month). In such examples the processor may distribute engagement with batteries or power transfer systems to minimize overuse of any one battery or power transfer system. In some examples, the battery characteristic may include a location defining the location of the power transfer system within the region. In such examples the processor may prioritize engagement with batteries or power transfer systems within a proximity or threshold distance from an identified power oversupply or undersupply of the electrical grid. The processor may in some examples use the location to determine one or more locations of frequent undersupply or frequent oversupply. In such examples the processor may be configured to indicate weaknesses in the electrical grid, and may inform on any improvements to electrical power distribution within the region or on locations where the electrical grid may be extended or improved. In some examples, the processor may be configured to, using the model, determine a predicted battery health indication based on the determined or detected one or more battery characteristics of the electric vehicle battery. The processor may be further configured to output the battery health indication, for example to a user device of a user of the power transfer system. The model may, in addition to predicting the power status (for example comprising a power surface density or an energy surface density) of a region, make use of the power transfer data to determine a battery health indicator of an electric vehicle battery. The model may therefore, based on the power transfer data modelled, act as an early identifier of, for example, a battery fault, a battery anomaly or poor battery health and as such the present systems and methods may be incorporated into a predictive battery management system for electric vehicles within the region. Anomaly behavior of individual batteries may be detected by statistically predicting the individual battery behavior, for example by using the model of power transfer data of similar batteries over time. Such a predictive battery management system may act to inform the battery owner, the power transfer system manufacturer or the battery-manufacturer of battery events, such as a predicted upcoming maintenance, a predicted upcoming repair, or a predicted upcoming failure.

The processor may be configured to use the model to predict the power status (for example comprising a power surface density or an energy surface density) of the region at the time instance in order to determine a predicted maximum amount of energy storage available in the region at the time instance, the energy storage in the form of electric vehicle battery capacity or storage. The predicted maximum amount of energy storage may be configured to accommodate an oversupply of power within or provided to the electrical grid, as described herein. In some examples therefore, the prediction of the power status (for example comprising a power surface density or an energy surface density) of the region at the time instance, based on the power transfer data, further comprises predicting an oversupply threshold, the oversupply threshold comprising a predicted maximum amount of available vehicle battery capacity to receive the G2V power transfer at the time instance.

The processor may be configured to use the model to predict the power status (for example comprising a power surface density or an energy surface density) of the region at the time instance in order to determine a predicted maximum amount of stored energy available in the region at the time instance, the stored energy stored within the electric vehicle batteries. The predicted maximum amount of stored energy may be configured to be transferred from the electric vehicle batteries to counteract an undersupply of power provided to the electrical grid as described herein. In some examples therefore, the prediction of the power status (for example comprising a power surface density or an energy surface density) of the region at the time instance based on the power transfer data further comprises predicting an undersupply threshold, the undersupply threshold comprising a predicted maximum amount of available stored vehicle battery energy to provide the V2X power transfer at the time instance.

Since the model is of statistical nature, the predicted oversupply threshold and the predicted undersupply threshold for the region at the time instance may each be a prediction of the maximum power storage or maximum stored power, respectively, on a confidence interval. A range of values for net power availability of the electrical grid between the oversupply and undersupply thresholds may be considered to be predictable by the model in accordance with the confidence interval (for example with a probability of 80%), such that when the net power availability within the region at the time instance is observed between the oversupply and undersupply thresholds, no real-time computation of a power status (for example comprising a power surface density or an energy surface density) of the region at the time instance may be required. In some examples, when the net power availability of the electrical grid approaches or exceeds the confidence interval of the oversupply or undersupply thresholds, it may be deemed necessary to perform a real-time computation of a power status (for example comprising a power surface density or an energy surface density)for the region at the time instance in place of, or to validate or support, the predicted power status. In some examples therefore, the processor may be further configured to detect that the net grid power availability is above a predefined confidence interval of the oversupply threshold, or below a predefined confidence interval of the undersupply threshold; and wherein the processor is further configured to, in response to the detection, calculate a real-time power status (for example comprising a power surface density or an energy surface density) of the region at the time instance. Such real-time computation may in some examples be computational resource and time intensive such that when the net power availability of the electrical grid does not exceed the predefined confidence interval of the oversupply threshold or the undersupply threshold, a predicted power status (for example comprising a power surface density or an energy surface density) is preferred.

In some examples, the setting of the direction of power transfer by the processor may be based on a known or determined grid capacity of the electrical grid, wherein the processor may be configured to set the direction of power transfer such that an amount (for example predicted by the processor) of V2X, such as V2G, power transfer is performed within the constraints of the known or determined grid capacity. In such examples, the grid capacity may inform the processor in setting the direction of power transfer of power transfer systems such that the V2G power transfer from the number of power transfer systems engaged in this manner does not exceed the grid capacity.

In some examples in which the net power availability of the electrical grid is observed to be within or greater than the predicted maximum energy storage availability of the region at the time instance, in accordance with the confidence interval of the oversupply threshold, the processor may be configured to identify external power receivers which may be configured to receive the oversupply of power. For example, in cases wherein the electrical grid of the region is operably connected to one or more adjacent electrical grids and configured to provide electrical power thereto, the processor may be configured to, in response to determining that the net power availability of the electrical grid is observed to be within or greater than the predicted maximum energy storage availability of the region at the time instance, configure the electrical grid for providing the oversupply of power to the adjacent electrical grid. In some examples therefore, the processor is further configured to, in response to the detection that the net grid power availability is above the predefined confidence interval of the oversupply threshold: identify one or more electrical power receivers that are external to the electrical grid, and configured to receive power from the electrical grid; and configure the electrical grid to provide an amount of power to the one or more electrical power receivers. It will be understood that the amount of power provided is such that the net grid power availability after the provision is less than the net grid power availability before the provision. In some examples the amount of power is such that the net grid power availability after the provision is approximately zero.

In some examples, the plurality of power transfer systems are located in a first region, and wherein the one or more electrical power receivers comprise an electrical grid of a second region. The second region may comprise a plurality of power transfer systems located within the second region, each power transfer system configured to enable the transfer of power between a battery of an electric vehicle and the electrical grid of the second region. The model may model power transfer data obtained from the plurality of power transfer systems of the second region, or a second model may be stored or received for storage, either on the memory or at a second memory, the second model modelling the power transfer data obtained from the plurality of power transfer systems of the second region. The processor may be further configured to use the model, or the second model, to predict, based on the power transfer data, a power status (for example comprising a power surface density or an energy surface density) of the second region at a time instance. Examples will be appreciated wherein the processor may receive the predicted power status of the second region at the time instance for processing, for example if the predicted power status of the second region is predicted remotely to the processor. The processor may in some examples be further configured to set a direction of net power transfer of at least one of the plurality of power transfer systems of the second region based on the predicted power status of the second region at the time instance. It will therefore be appreciated that adjacent regions having corresponding electrical grids may comprise dedicated systems in accordance with the present disclosure. Other examples will be appreciated wherein adjacent regions having corresponding electrical grids may comprise a single system of the present disclosure.

The processor may, in such examples, determine that the electrical grid of the second region is configured for receiving the surplus power from the electrical grid of the first region. In some such examples, the identifying of the one or more electrical power receivers is further in response to a detection that the net grid power availability of the electrical grid of the second region is negative, for example wherein power consumption from the electrical grid of the second region is greater than power generation within the second region. In some examples, the identifying of the one or more electrical power receivers is further in response to a detection that the net grid power availability of the electrical grid of the second region is below the predefined confidence interval of the undersupply threshold. The detection may be performed by the processor, or remote to the processor, for example by a processor of a system of the second region.

In some examples in which the net power availability of the electrical grid is observed to be less than the predicted maximum battery power availability of the region at the time instance, in accordance with the confidence interval of the undersupply threshold, the processor may be configured to identify external power providers which may be configured to provide the undersupply of power. For example, in cases wherein the electrical grid of the region is operably connected to one or more adjacent electrical grids and configured to receive electrical power therefrom, the processor may be configured to, in response to determining that the net power availability of the electrical grid is observed to be less than the predicted maximum battery power and energy availability of the region at the time instance, configure the electrical grid for receiving the undersupply of power from the adjacent electrical grid. In some examples therefore, the processor may be further configured to, in response to the detection that the net grid power availability is below a predefined confidence interval of the undersupply threshold: identify one or more electrical power providers that are external to the electrical grid, and configured to provide power to the electrical grid; and configure the electrical grid to receive an amount of power from the one or more electrical power providers. It will be understood that the amount of power received is such that the net grid power availability after the receipt is greater than the net grid power availability before the provision. In some examples the amount of power is such that the net grid power availability after the receipt is approximately zero.

In some examples, the plurality of power transfer systems are located in a first region, and wherein the one or more electrical power providers comprise an electrical grid of a second region. It will be appreciated that, as described herein, adjacent regions having corresponding electrical grids may comprise dedicated systems in accordance with the present disclosure or a single system of the present disclosure.

The processor may, in such examples, determine that the electrical grid of the first region is configured for receiving the undersupply of power from the electrical grid of the second region. In some such examples, the identifying of the one or more electrical power receivers is further in response to a detection that the net grid power availability of the electrical grid of the second region is positive, for example wherein power generation within the second region is greater than power consumption from the electrical grid of the second region. In some examples, the identifying of the one or more electrical power providers is further in response to a detection that the net grid power availability of the electrical grid of the second region is above the predefined confidence interval of the oversupply threshold. The detection may be performed by the processor, or remote to the processor, for example by a processor of a system of the second region. Therefore, in some examples, systems and methods of the present disclosure may facilitate transfer of power between electrical grids of adjacent regions based on the corresponding net power availability of the regions, optionally based on predicted undersupply or oversupply thresholds of the regions.

In accordance with a further aspect of the present disclosure, there is provided a method for balancing power transfer between electric vehicles and an electrical grid, the method comprising: receiving from a first sensor, a power consumption value indicating an amount of power consumed from the electrical grid of a region; receiving from a second sensor, a power generation value indicating an amount of power provided to the electrical grid of the region; calculating, using the power consumption value and the power generation value, a net grid power availability of the region; predicting, using a model of power transfer data from a plurality of power transfer systems distributed within the region, a power status (for example comprising a power surface density or an energy surface density) of the region; and controlling, based on the predicted power status of the region, a direction of power transfer of at least one of the plurality of power transfer systems.

In some examples wherein the model is a machine learning model (for example a probabilistic machine learning model), the method further comprises: training, using the power transfer data, the machine learning model to predict, based on the power transfer data, a power status (for example comprising a power surface density or an energy surface density) of the region at a corresponding time instance.

It will be appreciated that in some examples, the method may be performed using a system of the first aspect, and any features described herein as suitable for incorporation into the system of the first aspect will be understood as being suitable for incorporation into the method.

In accordance with a further aspect of the present disclosure, there is provided a method for balancing power transfer between electric vehicles and an electrical grid, the method comprising: receiving power transfer data from a plurality of power transfer systems distributed within a region, the power transfer data indicating the presence of the electric vehicle engaged with the power transfer system for permitting power transfer between the electric vehicle and the electrical grid, and time data associated with the presence; and training, using the power transfer data, a machine learning model (for example a probabilistic machine learning model) to predict, based on the power transfer data, a power status (for example comprising a power surface density or an energy surface density) of the region at a corresponding time instance.

In accordance with a further aspect of the present disclosure, there is provided a non-transitory computer readable storage medium comprising computer-executable instructions stored thereon, the computer executable instructions configured, when executed by a processor, to: receive from a first sensor, a power consumption value indicating an amount of power consumed from the electrical grid of a region; receive from a second sensor, a power generation value indicating an amount of power provided to the electrical grid of the region; calculate, using the power consumption value and the power generation value, a net grid power and energy availability of the region; predict, using a model of power transfer data from a plurality of power transfer systems distributed within the region, a power status (for example comprising a power surface density or an energy surface density) of the region; and control, based on the predicted power status of the region, a direction of power transfer of at least one of the plurality of power transfer systems.

In some examples, the computer-executable instructions may be configured, when executed by the processor, to perform any of steps performable by a system or method described herein.

In accordance with a further aspect of the present disclosure, there is provided an energy trading system, the system comprising: a plurality of power transfer systems located within the region, each power transfer system configured to enable the transfer of power between a battery of an electric vehicle and the electrical grid; memory storing a model of power transfer data obtained from the plurality of power transfer systems; and a processor configured to use the model to predict, based on the power transfer data, a power status (for example comprising a power surface density or an energy surface density) of the region at a time instance; wherein the processor is further configured to: determine, based on a control authorization, that at least one power transfer system of the plurality of power transfer systems is configured for control by the processor; receive, from the at least one power transfer system, a predefined power transfer contract; and set, based on the predefined power transfer contract, a direction of net power transfer of the at least one power transfer system. The setting of the direction of net power transfer of the at least one power transfer systems may, in some examples, be based on the predicted power status of the region at the time instance. In some examples, the control authorization may be selectable by a control authorization selector, the control authorization selector comprising at least one of: an operator of a vehicle; an operator of the power transfer system; an operator of the electrical grid monitoring system. In some examples, the control authorization selector, for example an operator or user of a vehicle or a power transfer system, may opt-in for permitting control of the direction of power transfer of the power transfer system by the processor. The selectable (for example user-selectable) control authorization may, for example, be selected by way of an energy trading platform, setting terms of the contract between the control authorization selector and a power transfer provider or receiver (for example an electrical grid operator), for the setting of the direction of power transfer. The predefined power transfer contract may therefore determine further communications in response to the setting of the net power transfer direction, for example associated with a transaction between the control authorization selector (for example the user or operator of the vehicle or power transfer system) and the power transfer provider or receiver (for example the electrical grid operator).

In accordance with a further aspect of the present disclosure, there is provided a battery management system for monitoring battery health of electric vehicles, the system comprising: a plurality of power transfer systems located within a region, each power transfer system configured to enable the transfer of power between a battery of an electric vehicle and the electrical grid; a memory storing a model of power transfer data obtained from the plurality of power transfer systems; and a processor configured to use the model to predict, based on the power transfer data, a battery health indicator of an electric vehicle battery engaged with a power transfer system of the plurality of power transfer systems, at a time instance; wherein the processor is further configured to output the battery health indicator. In some examples the battery health indicator may be output to a user device of a user of the power transfer system. In some examples, the battery health indicator may indicate one or more selected from: a predicted battery anomaly; a predicted battery fault; a predicted battery repair; a predicted battery service. Any suitable battery health indicator will be appreciated which may indicate an ability of the battery to continue to provide or receive power transfer by way of the power transfer system.

It will be appreciated that any features described herein as suitable for incorporated into one or more aspects or embodiments of the present disclosure are intended to be generalizable across any and all aspects and embodiments of the present disclosure.

BRIEF DESCRIPTION OF THE DRAWINGS

FIG. 1 shows an example electrical grid monitoring system for balancing power transfer between electric vehicles and an electrical grid of a region in accordance with the present disclosure;

FIG. 2A shows a chart depicting electrical grid sensor data indicating continuous power supply to the grid over time by power plants within a region, for use in determining a net grid power availability in accordance with the present disclosure;

FIG. 2B shows a chart depicting electrical grid sensor data indicating fluctuating power supply to the grid over time by renewable power sources within the region, for use in determining a net grid power availability in accordance with the present disclosure;

FIG. 2C shows a chart depicting electrical grid sensor data indicating fluctuating power consumption from the grid over time by residential, commercial and industrial power consumers, for use in determining a net grid power availability in accordance with the present disclosure;

FIG. 2D shows a chart depicting a net grid power availability over a time period within the region, determined using the power generation and power consumption data of FIG. 2A-2C, together with predicted oversupply and undersupply thresholds determined in accordance with the present disclosure;

FIG. 2E shows a chart depicting stored energy and energy storage availability of electric vehicle batteries distributed within the region of FIG. 2A to FIG. 2D over the time period depicted in FIG. 2D, the stored energy available for transfer to the grid or the power consumers by way of a plurality of power transfer systems, and the energy storage available to receive energy from the grid by way of a plurality of power transfer systems;

FIG. 3A depicts a map view of the region of Switzerland, and FIG. 3B depicts a sequence of power surface densities for each of two directions of power transfer (V2X and G2V), predicted for the region of FIG. 3A at time instances throughout the day using power transfer data in accordance with the present disclosure;

FIG. 3C and FIG. 3D each depict an example power surface density of the region of FIG. 3A at one of the time instances, indicating a power surface density of an individual area of interest when the direction of power transfer is V2X and G2V respectively;

FIG. 3E depicts a chart indicating the fluctuating power availability of an example electrical grid monitoring system of the present disclosure located within the region of FIG. 3A to FIG. 3C;

FIG. 4A depicts a sequence of energy surface densities for each of two directions of power transfer (V2X and G2V), predicted for the region of FIG. 3A at time instances throughout the day using power transfer data in accordance with the present disclosure;

FIG. 4B and FIG. 4C each depict an example energy surface density of the region of FIG. 4A at one of the time instances, indicating an energy surface density of an individual area of interest when the direction of power transfer is V2X and G2V respectively;

FIG. 4D depicts a chart indicating the fluctuating energy storage availability of an example electrical grid monitoring system of the present disclosure located within the region of FIG. 4A to FIG. 4C;

FIG. 5A and FIG. 5B each show an alternate example system to that shown in FIG. 1, the alternate example systems shown operating over multiple regions for engaging in power transfer and trading between regions;

FIG. 6 illustrates an example parking facility with multiple wireless charging stations for use by electric vehicles in accordance with systems and methods of the present disclosure;

FIG. 7 is a hierarchical block diagram of an example wireless power transfer system for wireless electric vehicle charging, suitable for use in accordance with systems and methods of the present disclosure;

FIG. 8A shows an example parking space and a parking scenario illustrating a positional relationship between a vehicle and a wireless charging station in a ground-based coordinate system, suitable for use in accordance with systems and methods of the present disclosure;

FIG. 8B shows an example parking space and a parking scenario illustrating a positional relationship between a wireless charging station and a vehicle in a vehicle-based coordinate system, suitable for use in accordance with systems and methods of the present disclosure;

FIG. 9 shows a multiple parking space facility providing a plurality of wireless charging stations illustrating an example parking scenario with a vehicle, suitable for use in accordance with systems and methods of the present disclosure;

FIG. 10 depicts steps of a method for determining the position of a vehicle-based wireless power transfer apparatus relative to a ground-based wireless power transfer apparatus in accordance with the present disclosure; and

FIG. 11 depicts further steps of an example method for determining the position of a vehicle-based wireless power transfer apparatus relative to a ground-based wireless power transfer apparatus in accordance with the present disclosure.

## DETAILED DESCRIPTION

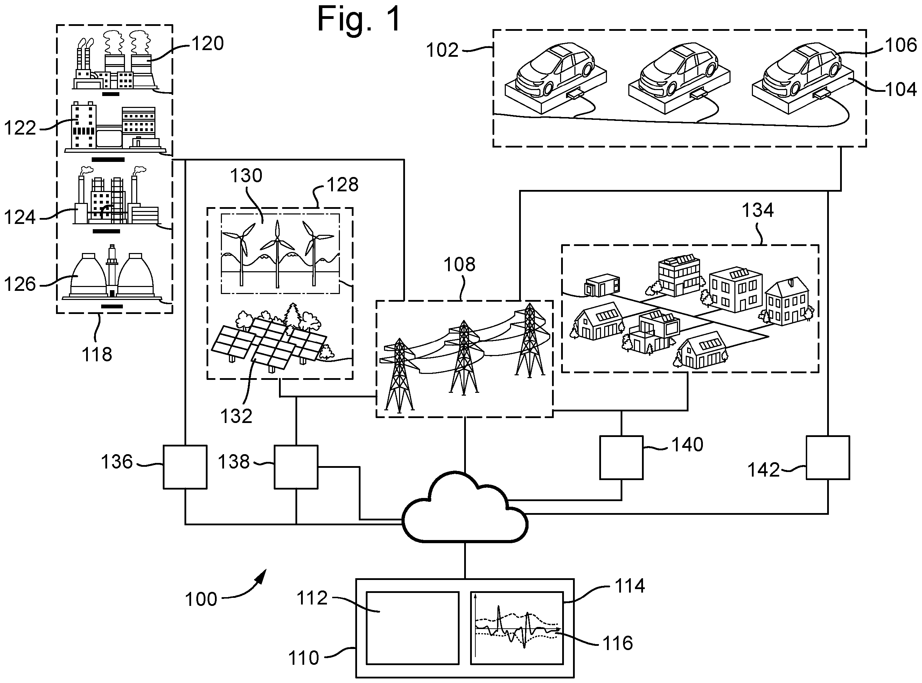

Referring to FIG. 1, an example electrical grid monitoring system 100 for balancing power transfer between electric vehicles and an electrical grid of a region is shown in accordance with the present disclosure. The system 100 comprises a plurality 102 of power transfer systems 104, which in the particular example shown are wireless power transfer (WPT) systems 104 each configured to transfer power wirelessly between a vehicle battery of a corresponding electric vehicle (EV) 106 and an electrical grid 108 of a region. Each WPT system 104 in the example shown is configured to transfer power wirelessly to the corresponding electric vehicle battery from the electrical grid 108, such as during charging the electric vehicle battery, and from the electrical vehicle battery to the electrical grid 108. The system 100 further comprises a cloud-based computing system 110 in communication with the plurality of WPT systems 102, the cloud-based computing system 110 configured to receive power transfer data from the plurality of WPT systems 102 and further configured to control a direction of power transfer of each WPT system 104 of the plurality of WPT systems 102. The computing system 110 comprises a processor 112 and a memory 114, the memory 114 having stored thereon a probabilistic machine learning model 116 trained on the power transfer data obtained from the plurality of WPT systems 102. The power transfer data used to train the probabilistic machine learning model 116 is indicative of an amount of power available for use from electric vehicle batteries and is additionally indicative of power storage available from electrical vehicle batteries, from each of the corresponding WPT systems 104 of the plurality of WPT systems 102. The power available for use, and the available energy storage, are together indicative of a power surface density and an energy surface density of the system within the region, and when modelled across time by way of the power transfer data, can be used to predict, using the model 116, a power status of the region at a particular time instance.

In the particular example 100 shown, the electrical grid 108 of the region is configured to receive generated power from power plants 118 of the region, such as nuclear 120, hydroelectric 122, geothermal 124 and biomass 126 power plants, and further from renewable energy sources 128, such as wind 130 and solar 132 energy sources. The electrical grid 108 is configured to provide the generated power to power consumers 134 such as residential, commercial and industrial power consumers within the region. In the example 100 shown, the system 100 further comprises a sensor system having a first sensor 136 in communication with the cloud based computing system 110 and configured to detect an amount of power generated by the power plants 118 of the region and provided to the electrical grid 108, a second sensor 138 configured to detect an amount of power generated by the renewable energy sources 128 of the region and provided to the electrical grid 108, and a third sensor 140 configured to detect an amount of power consumed from the electrical grid by the power consumers 134 of the region. The sensor system further comprises a fourth sensor 142 configured to detect an amount of power generated and provided to the electrical grid 108 and consumed from the electrical grid 108 by the plurality of WPT systems 102.

In use, the processor 112 of the system 100 may use sensor data obtained from the first 136, second 138, third 140 and fourth sensors 142, indicative of power supply and power consumption from the electrical grid 108, to determine instances in time of undersupply or oversupply of power to the electrical grid 108. In order to overcome the power deficit and power surplus during the periods, it may be necessary to consider the availability of power and power storage from electric vehicle batteries accessible by way of the plurality of power transfer systems 102. Such power availability and power storage may act to balance the electrical grid 108 during the periods by contributing power to overcome a power deficit, or storing power to overcome a power surplus. In order to determine the power availability and power storage, numerous considerations are required such as those discussed herein, including the availability of battery connectivity to the grid, together with numerous individual battery characteristics of the batteries, of which there may be millions. Such an amount of parameters for consideration in calculation of the power availability and power storage capacity of such batteries may make real-time computation thereof time and energy intensive, and may in some cases not meet the minute- or sub-minute response periods required for effectively balancing the electrical grid 108.

Using the system as described in FIG. 1, however, during time instances of determined undersupply or oversupply of power to the grid 108, the processor 112 is configured to use the probabilistic machine learning model 116 to predict a power surface density of the region at the time instances to establish the power supply and power storage capability of the plurality of WPT systems 102 at the time instances. Such a prediction is based on learned trends in power transfer data obtained from each WPT system 104 of the plurality of WPT systems 102, along with the associated electric vehicles and batteries historically connected thereto. Since patterns can be obtained from the power transfer data to determine particular regularities in behavior in relation to usage of each WPT system 104, the prediction of the power surface density of the region can be afforded a level of confidence associated with the regularities. When operating within an established level of confidence, the predicted power surface density can offer a much more time and resource efficient mode of determining power requirements for balancing the electrical grid 108 than a continuous real-time determination of power surface density.

Based on the predicted power surface density, the processor 112 is then further configured to set a direction of net power transfer of each WPT system 104 of the plurality of WPT systems 102. During times of undersupply of power to the electrical grid 108, wherein the available power generation by the power plants 120 and the renewable energy sources 128 is not sufficient to meet the power demand of the power consumers 134, the processor 112 may predict based on the power surface density that the plurality of WPT systems 102 comprise stored power capable of meeting the power deficit. In response to the prediction, the processor 112 may then set a direction of net power transfer of each WPT system 104 of the plurality of WPT systems 102 to a net positive output of power to the electrical grid 108, the provision of power substantially equal to the power deficit calculated by the processor 112 using the sensor data from the first 136, second 138, third 140 and fourth 142 sensors.

Similarly, during times of oversupply of power to the electrical grid 108, wherein the available power generation by the power plants 120 and the renewable energy sources 128 exceeds the power demand of the power consumers 134, the processor 112 may predict based on the power surface density that the plurality of WPT systems 102 comprise power storage capacity capable of storing the power surplus. In some solutions, power generators such as specific power plants 120 or specific renewable energy sources 128 may be deactivated or disconnected from the electrical grid 108 such that the power generation is reduced so as not to exceed the power demand. This could however result in wasted energy, particularly in the form of renewable energy which may itself be intermittently available and therefore not guaranteed to be available for a particular time period when needed. Using the system 100 of FIG. 1, however, in response to the prediction of the power surface density of the region, the processor 112 may then set a direction of net power transfer of each WPT system 104 of the plurality of WPT systems 102 to a net storage of power within respective electric vehicle batteries, from the electrical grid 108, the power storage substantially equal to the power surplus calculated by the processor 112 using the sensor data from the first 136, second 138, third 140 and fourth 142 sensors.

As such, the example system of FIG. 1 demonstrates the ability of systems and methods of the present disclosure to balance the electrical grid during periods of power undersupply or oversupply within a region. It will be appreciated that in place of, or in addition to, the power surface density, an energy surface density of the region may in some examples be predicted as part of the predicted power status of the region at the time instance.

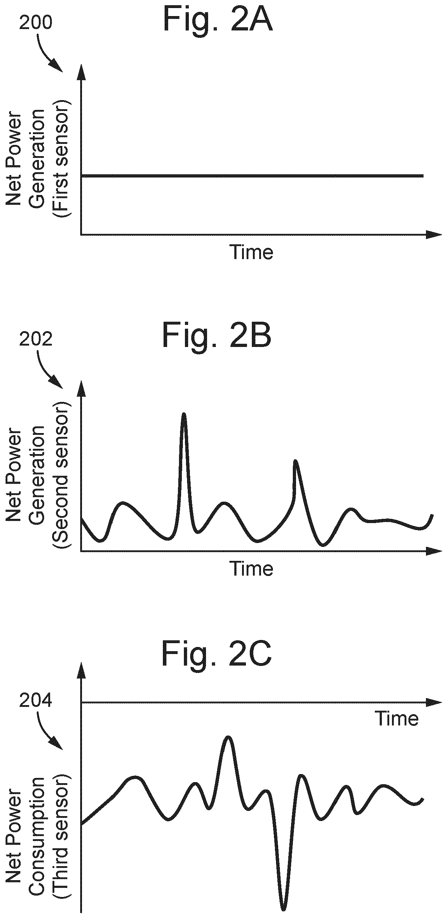

Referring to FIG. 2A to FIG. 2C, charts depicting example sensor data are shown, the sensor data obtained from the sensor system of FIG. 1. In particular, FIG. 2A depicts sensor data 200 obtained from the first sensor 136 indicting power output to the electrical grid 108 from power plants 120. As can be seen from the sensor data 200 of FIG. 2A, the output of power to the grid from power plants 120 remains stable over time. FIG. 2B depicts sensor data 202 obtained from the second sensor 138 indicating power output to the electrical grid 108 by renewable energy sources 128. As can be seen from the sensor data 202, power output from renewable energy sources can in some cases fluctuate over time, typically as a result of weather changes or time of day changes in the cases of wind and solar energy. FIG. 2C shows sensor data 204 obtained from the third sensor 140 indicating power consumption from the grid by a variety of power consumers 134 such as residential, commercial and industrial power consumers. As can be seen from FIG. 2C, power consumption from the electrical grid 108 can fluctuate over time in accordance with consumer behavior.

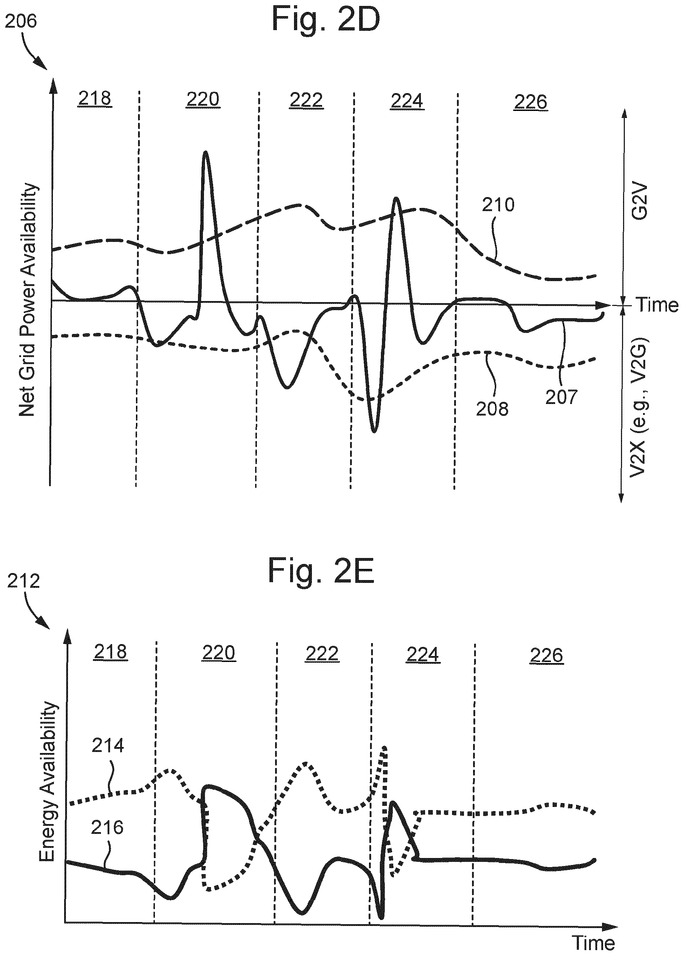

As described in relation to FIG. 1, in use the processor 112 may process the sensor data 200, 202, 204 to determine a net power availability of the electrical grid 108 by comparing the power generation data 200, 202 with the power consumption data 204. Example net power availability 207 of the electrical grid 108 over time is shown depicted in the chart 206 of FIG. 2D. Periods wherein the net power availability 207 is positive indicate a greater supply of power to the electrical grid 108 by power generators 120, 128 than that consumed by power consumers 134. Periods wherein the net power availability 207 is negative indicate a lower supply of power to the electrical grid 108 by power generators 120, 128 than that consumed by power consumers 134. The resulting power oversupply or undersupply could potentially risk grid imbalance.

The processor 112 of the system 100 of FIG. 1 is configured to predict a power status of the region representing power availability (power surface density) or power storage availability (energy surface density) of the plurality of power transfer systems 102 within the region. An ability of the system 100 to deal with oversupply and undersupply fluctuations as shown by the net power availability data 206 of FIG. 2D may depend on the extent of the fluctuations and the overall power availability and power storage capacity as represented by the predicted power status of the region. In the particular example 100 shown, predicting the power status by the processor 112 using the probabilistic machine learning model 116 comprises predicting an undersupply threshold 208 or an oversupply threshold 210 shown represented on the chart 206 of FIG. 2D. The undersupply threshold 208 and the oversupply threshold 210 each represent a maximum capability of the plurality of WPT systems 102 to provide power or store energy to counteract a corresponding undersupply of power or an oversupply of power respectively. The undersupply threshold 208 and the oversupply threshold 210 are shown depicted together on the chart 206 of FIG. 2D, and may be predicted simultaneously or may be predicted individually, for example based on a corresponding detection of either a power undersupply or a power oversupply respectively. It will be appreciated that, as a result of the statistical nature of the probabilistic machine learning model 116, the undersupply threshold 208 and the oversupply threshold 210 comprise a confidence interval setting, for example, a percentage confidence of the predicted thresholds. The confidence interval may be the same for each of the thresholds or may in some cases be different. It may be the case that, when the net power availability 206 approaches one of the predicted thresholds, for example approaching or exceeding the corresponding confidence interval of the respective threshold 208, 210, the processor may perform a real-time calculation of the power surface density of the region. Such a real-time computation may require a greater amount of time and resources than the predicted power surface density, but may provide an accurate evaluation of the power surface density of the region at the time instance such that appropriate grid balancing action may be taken.

A chart 212 of example predicted energy availability of electric vehicle batteries within the region is provided in FIG. 2E, which shows the energy storage availability 214 (for receiving surplus energy from the grid) and the stored energy availability 216 (for contributing energy to energy receivers such as the grid) predicted to be available from electric vehicle batteries in the region by way of the plurality of WPT systems. The predicted energy availabilities 214, 216 may be used by the processor in determining the undersupply threshold 208 and the oversupply threshold 210.

As can be seen in the chart 206 of FIG. 2D, the net power availability 207 in a region fluctuates over time, and the associated predicted undersupply threshold 208 and oversupply threshold 210 also fluctuate in accordance with the patterns in power transfer data learned from the plurality of WPT systems 102, representing the associated behavior of the WPT systems over time. The temporal fluctuations in the predicted undersupply threshold 208 and oversupply threshold 210, which can represent the predicted power surface density and energy surface density of the plurality of WPT systems in a region, can be seen further represented in FIG. 2E, which shows a chart 212 of example predicted energy availability of electric vehicle batteries within the region. In particular, the energy storage availability 214 (for receiving surplus energy from the grid) and the stored energy availability 216 (for contributing energy to energy receivers such as the grid) predicted to be available from electric vehicle batteries in the region by way of the plurality of WPT systems are shown over the same time period as that depicted in FIG. 2D. The predicted energy availabilities 214, 216 may be used by the processor in determining the undersupply threshold 208 and the oversupply threshold 210 shown in FIG. 2D.

The time period represented by the net power availability chart 206 of FIG. 2D and the energy availability chart 212 of FIG. 2E is shown segmented into five sections 218, 220, 222, 224, 226 which will now be discussed in-turn. During the first section 218, as can be seen from the net power availability 207 in FIG. 2D, power consumption from the electrical grid is approximately equal to power generation, such that the net power availability 207 of the electrical grid is approximately zero. During the first section 218 therefore, the electrical grid may be considered to be balanced. As can be seen in the energy availability chart 212 of FIG. 2E, there is predicted to be approximately double the energy storage availability 214 when compared with the stored energy availability 216 present within electric vehicle batteries of the region during the first section 218. The predicted undersupply and oversupply thresholds 208, 210 shown in FIG. 2D indicate a relatively narrow predicted window of energy availability during the first section 218.

Referring to the second section 220, it can be observed that for a short period there is a small undersupply of power to the electrical grid when compared with electrical power consumption, resulting in the net grid power availability 207 dropping below zero. As a result, the processor sets a direction of net power transfer of a plurality of power transfer systems within the region to V2G, such that stored energy within electric vehicle batteries is transferred to the electrical grid to meet the deficit. As a result of the change in direction of net power transfer, the predicted amount of stored energy 216 within the electric vehicle batteries can be observed to drop, and the amount of predicted energy storage availability 214 can be observed to increase accordingly. At the local minimum of the momentary trough in net grid power availability 207, the measured net grid power availability 207 approaches the predicted undersupply threshold 208, thereby indicating that, in accordance with the power transfer data on which the model was trained, the stored energy availability 216 within the electric vehicle batteries is predicted to be insufficient to meet the deficit in grid power availability 207. In some examples, the processor therefore performs a real-time determination of a power status of the region, including a real-time determination of a power surface density and an energy surface density of the region, in order to control the distribution of power and optionally source power from external sources where needed. Following the local minima of the third section 222, the net grid power 207 experiences a peak in availability, in which the net grid availability 207 greatly exceeds zero. As such, and on detection thereof, the processor sets the direction of net power transfer to G2V within the region, such that surplus grid energy is transferred by way of the plurality of power transfer systems to be stored in electric vehicle batteries within the region. The energy storage can be observed to result in a reduction in predicted energy storage availability 214, and a corresponding increase in predicted stored energy availability 216. The local maximum of the peak in net grid power availability 207 exceeds the predicted oversupply threshold 210 such that a real-time determination of the power status of the region is performed for allocation and sourcing of grid power receivers and energy storage, which may include grid power receivers and energy storage external to the region.

Referring to the third section 222, and similarly to the second section 220, it can be observed that for a short initial period there is an undersupply of power to the electrical grid when compared with electrical power consumption, resulting in the net grid power availability 207 dropping below zero. As a result, the processor again sets the direction of net power transfer of a plurality of power transfer systems within the region to V2G, such that stored energy within electric vehicle batteries is transferred to the electrical grid to meet the deficit. As a result of the change in direction of net power transfer, the predicted amount of stored energy 216 within the electric vehicle batteries can be observed to drop, and the amount of predicted energy storage availability 214 can be observed to increase accordingly. At the local minimum of the more pronounced trough in net grid power availability 207, the measured net grid power availability 207 greatly exceeds the predicted undersupply threshold 208, thereby indicating that, in accordance with the power transfer data on which the model was trained, the stored energy availability 216 within the electric vehicle batteries is predicted to be insufficient to meet the deficit in grid power availability 207. As with section 220, in some examples the processor therefore performs a real-time determination of a power status of the region, including a real-time determination of a power surface density and an energy surface density of the region, in order to control the distribution of power and optionally source power from external sources where needed. Following the local minima of the second section 220, the net grid power 207 reaches approximately zero such that the amount of power contribution to the grid is approximately equal to the power consumption from the grid, and the grid is balanced near the end of the third section 222.

Referring to the fourth section 224, the distribution of the measured net grid power availability follows similarly to the second section 220. In particular, it can be observed that for an initial period there is a significant undersupply of power to the electrical grid when compared with electrical power consumption, resulting in the net grid power availability 207 dropping below zero. As a result, the processor sets a direction of net power transfer of a plurality of power transfer systems within the region to V2G, such that stored energy within electric vehicle batteries is transferred to the electrical grid to meet the deficit. As a result of the change in direction of net power transfer, the predicted amount of stored energy 216 within the electric vehicle batteries can be observed to drop, and the amount of predicted energy storage availability 214 can be observed to increase accordingly. As with the third section 222, at the local minimum of the initial trough in net grid power availability 207, the measured net grid power availability 207 can be observed to drop below the predicted undersupply threshold 208, thereby indicating that, in accordance with the power transfer data on which the model was trained, the stored energy availability 216 within the electric vehicle batteries is predicted to be insufficient to meet the deficit in grid power availability 207. As with the second section 220 and the third section 222, in some examples, the processor therefore performs a real-time determination of a power status of the region, including a real-time determination of a power surface density and an energy surface density of the region, in order to control the distribution of power and optionally source power from external sources where needed. Following the local minima of the fourth section 224, the net grid power 207 experiences a strong peak in availability, in which the net grid availability 207 exceeds zero. As such, and on detection thereof, the processor sets the direction of net power transfer to G2V within the region, such that surplus grid energy is transferred by way of the plurality of power transfer systems to be stored in electric vehicle batteries within the region. The energy storage can be observed to result in a reduction in predicted energy storage availability 214, and a corresponding increase in predicted stored energy availability 216. The local maximum of the peak in net grid power availability 207 exceeds the predicted oversupply threshold 210 such that a real-time determination of the power status of the region is performed for allocation and sourcing of grid power receivers and energy storage, which may include grid power receivers and energy storage external to the region. Following this peak in the net grid power availability 207 in the fourth section 224, there is a momentary drop below zero before a recovery to approximately zero at the end of the fourth section 224.

Referring to the fifth section 226, similarly to the first section 218, while there is some small drop in net grid power availability 207 toward the end of the fifth section 226 the net grid power availability 207 remains approximately zero during this section 226 such that the grid is largely balanced.

It will be appreciated that the setting of the direction of net power transfer by the processor may be for some or all of the plurality of power transfer systems within the region, and that such control of the power transfer systems may be distributed dynamically over time within the region to avoid excessive control of any one such power transfer system. Such dynamic control may in some cases maximize periods of electric vehicle charging of power transfer systems within the region. It will further be appreciated that such control may additionally be spatially distributed within the region based on local fluctuations in power supply and demand within the region. As such, in some examples the control of the power transfer systems may be determined based on a location of the power transfer systems within the region, and may be further based on a local power status determined by the processor, the local power status determined for a subregion within the region, the subregion comprising, or within a threshold proximity of, said location of the power transfer system. It will be appreciated that the subregion is smaller than the region but is wholly contained within the region.

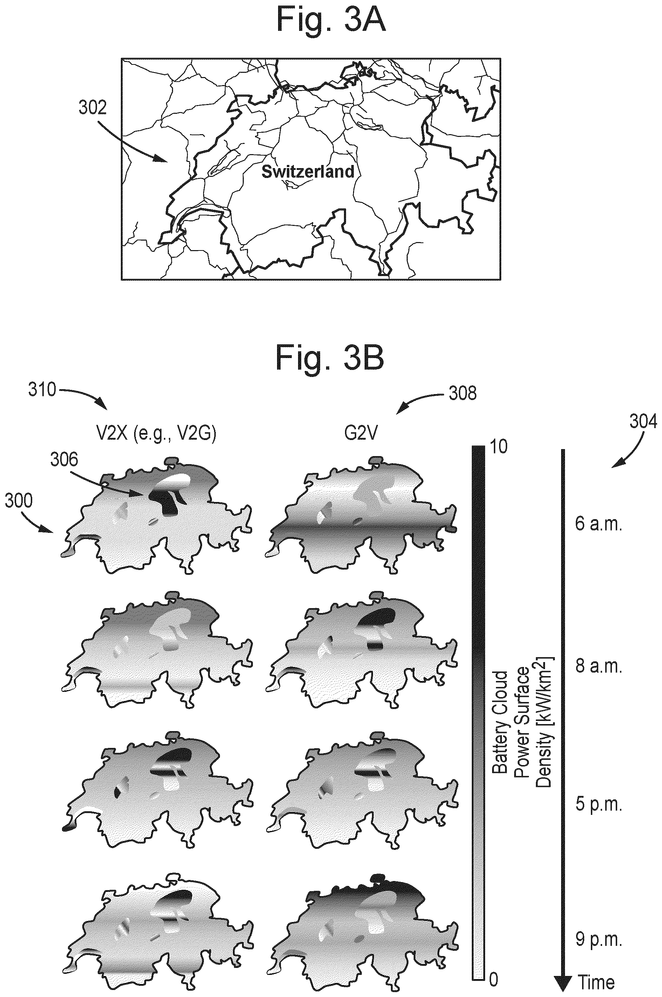

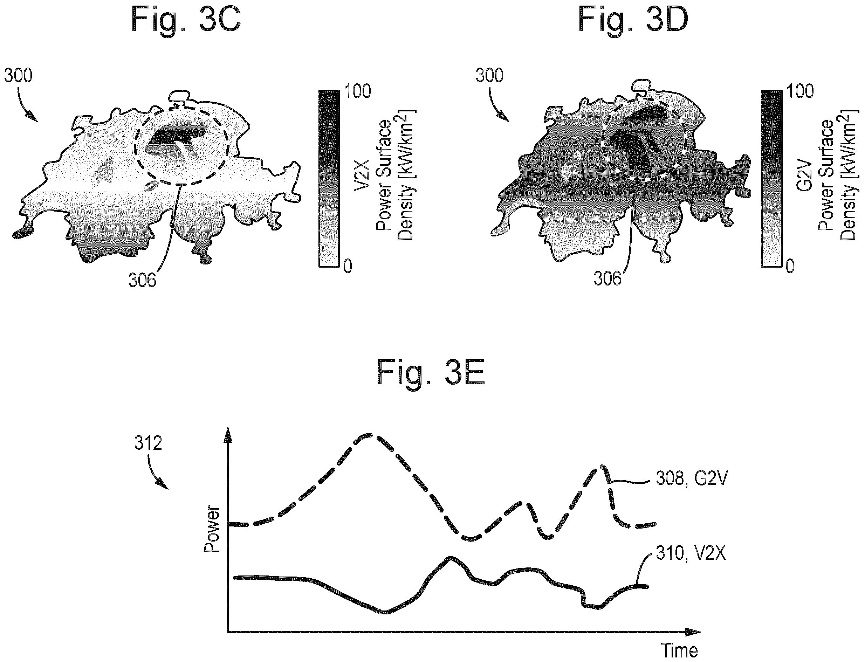

FIG. 3B depicts a sequence of example predicted power surface densities 300 of a plurality of WPT systems, and associated electric vehicle batteries, distributed within the region of Switzerland 302 as seen in the map view of FIG. 3A, the power surface densities integrated across the region 302 at different times 304 throughout a working day, from 6 am to 9 pm. The power surface densities 300 are predicted based on historic power transfer data obtained from the plurality of WPT systems, the power transfer data used to train a machine learning model in predicting the power surface densities at a particular time instance 304. It will be appreciated that the power transfer data may be any suitable data as described herein, and may be obtained by the plurality of WPT systems, for example from a vehicle, and communicated to a processor for use in training the model. As can be seen from FIG. 3B, the power surface density 300 in some examples may be measured in $kW/km^2$ as depicted, and in such examples may range from approximately 0 $kW/km^2$ to approximately 10 $kW/km^2$ or more (for example ranging in the order of $MW/km^2$, $GW/km^2$ or any suitable order of magnitude depending on the application), wherein in FIG. 3B the value of the predicted power surface density 300 is represented by shading, lighter shades indicating a lower power surface density. As can be seen in FIG. 3B, the power surface densities may be integrated across a region as a whole, or may include specific predicted power surface densities integrated across an area or sub-region of interest 306 (as seen in the close-up views of FIG. 3C and FIG. 3D). In some examples, such as that depicted, the power surface densities 300 may be predicted depending on a direction of net power transfer of the plurality of WPT systems, whether from grid to vehicle (G2V) as shown in the close-up view of FIG. 3D or from vehicle to power receiver (V2X) as shown in the close-up view of FIG. 3C, such as vehicle to grid (V2G) or vehicle to home (V2H). In the case of G2V, the power surface density 300 represents the power availability within the electrical grid suitable for transfer to electric vehicle batteries by way of the plurality of WPT systems. In the case of V2X, the power surface density 300 represents the power available to be used from stored energy within the electric vehicle batteries, suitable for transfer to a power receiver such as the electrical grid, by way of the plurality of WPT systems. The power for a specific region of interest 306 in each case (G2V 308, V2X 310) may be determined from the power surface density 300, for example, by way of the following::

$$P_{V2X}(t) = \int P_{surface,V2X}(t)\, dA_{V2X} \; ; \; P_{G2V}(t) = \int P_{surface,G2V}(t)\, dA_{G2V}$$

in which, $P_{surface,V2x}(t)$ represents the power surface density 300 of the entire region 302 and $P_{V2X}(t)$ represents the power 310 of the sub-region of interest 306 ($A_{V2X}$) at the time instance 304, t, when the direction of power transfer is V2X 310; $P_{surface,G2V}(t)$ represents the power surface density 300 of the entire region 302 and the $P_{G2V}(t)$ represents the power 308 of the sub-region of interest 306 ($A_{G2V}$) at the time instance 304, t, when the direction of net power transfer is G2V 308. At the area of interest 306 within the region 302 in the example shown, there is a high number of residences, but workers commute from the area 306 to other areas within the regions for work. As such, and as can be seen in FIG. 3B, the predicted power surface density 300 for V2X is lower during working times (between 8 am and 5 pm), when EVs are more likely to be in use and away from their respective WPT system. Therefore, the available battery energy and battery storage is reduced in the area during working times. The power surface density 300 for V2X of the area 306 can be observed to be higher in the area during the early morning (6 am) and in the evening (5 pm and 9 pm) when EVs are more likely to be engaged with the respective WPT systems, for example while charging the EV battery. Contrastingly, the power surface density 300 for G2V may be reduced during the early morning and evening (6 am and 9 pm) when power producers are likely to be in less demand and renewable power production sources such as solar plants experience reduced operation, while being higher during the working day (8 am and 5 pm). The chart 312 of FIG. 3E demonstrates how the availability of power for use in either G2V 308 or V2X 310 power transfer can fluctuate within an area of interest 306 over the period of a day.

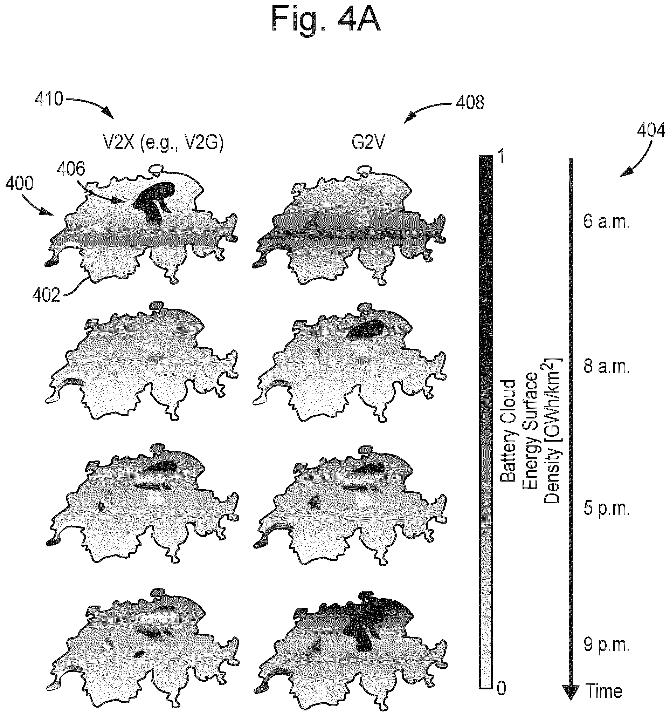

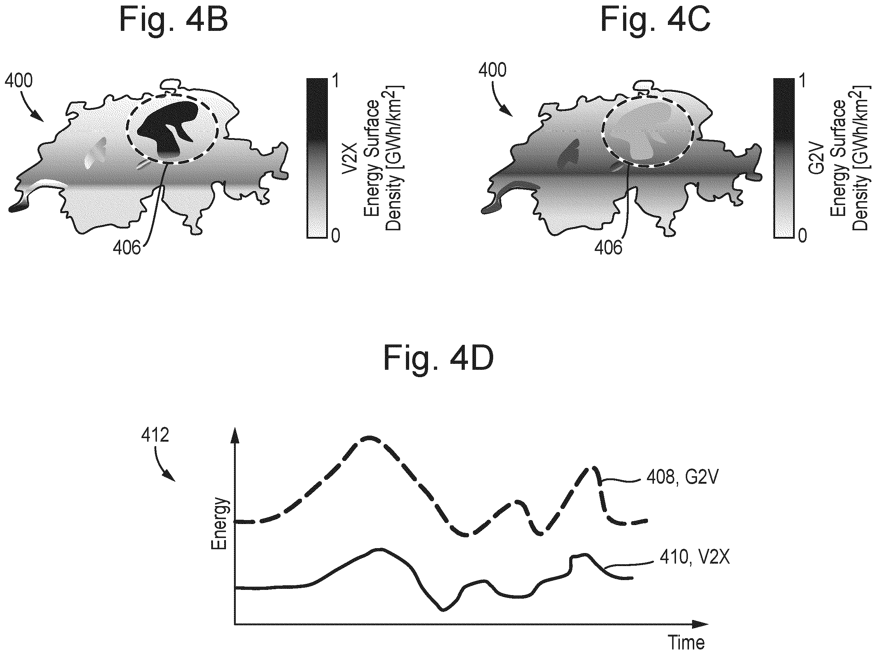

FIG. 4A depicts a sequence of example predicted energy surface densities 400 of a plurality of WPT systems, and associated electric vehicle batteries, distributed within the region of Switzerland 402 as seen in the map view of FIG. 3A, the energy surface densities integrated across the region 402 at different times 404 throughout a working day, from 6 am to 9 pm. The energy surface densities 400 are predicted based on historic power transfer data obtained from the plurality of WPT systems, the power transfer data used to train a machine learning model in predicting the energy surface densities at a particular time instance 404. It will be appreciated that the power transfer data may be any suitable data as described herein, and may be obtained by the plurality of WPT systems, for example from a vehicle, and communicated to a processor for use in training the model. As can be seen from FIG. 4A, the energy surface density 400 in some examples may be measured in $GWh/km^2$ as depicted, and may range from approximately 0 $GWh/km^2$ to approximately 10 $GWh/km^2$ or more (and may be for example any suitable order of magnitude depending on the application), wherein in FIG. 4A the value of the predicted energy surface density 400 is represented by shading, lighter shades indicating a lower energy surface density. As can be seen in FIG. 4B, the energy surface densities may be integrated across a region as a whole, or may include specific predicted energy surface densities integrated across an area or sub-region of interest 406 (as seen in the close-up views of FIG. 4B and FIG. 4C). In some examples, such as that depicted, the energy 408, 410 for a sub-region of interest 406 may be predicted depending on a direction of net power transfer of the plurality of WPT systems, whether from grid to vehicle (G2V) as shown in the close-up view of FIG. 4C or from vehicle to energy receiver (V2X) as shown in the close-up view of FIG. 4B, such as vehicle to grid (V2G) or vehicle to home (V2H). In the case of G2V, the energy surface density 400 represents the energy storage availability within electric vehicle batteries and suitable for receiving energy from the electrical grid by way of power transfer using the plurality of WPT systems. In the case of V2X, the energy surface density 400 represents the stored energy available within the electric vehicle batteries, suitable for transfer to an energy receiver such as the electrical grid, by way of power transfer using the plurality of WPT systems. The energy for a specific region of interest 406 in each case (G2V 408, V2X 410) may be determined from the energy surface density 400, for example, by way of the following:

$$E_{V2X}(t) = \int E_{surface,V2X}(t)\, dA_{V2X} \;;\; E_{G2V}(t) = \int E_{surface,G2V}(t)\, dA_{G2V}$$

in which, $E_{surface,V2X}(t)$ represents the energy surface density 400 of the region 402 at the time instance, t, when the direction of net power transfer is V2X; $E_{surface,G2V}(t)$ represents the energy surface density 400 of the region 402 at the time instance, t, when the direction of net power transfer is G2V; $E_{V2X}(t)$ represents the energy 410 of a specific area 406 ($A_{V2X}$) of interest in the region at the time instance, t, when the direction of net power transfer is V2X; $E_{G2V}(t)$ represents the energy 408 of a specific area 406 ($A_{G2V}$) of interest in the region 402 at the time instance, t, when the direction of net power transfer is G2V. The area of interest 406 within the region 402 in the example shown is the same as that shown and described in relation to FIG. 3A to FIG. 3E. As such, and as can be seen in FIG. 4A, the predicted energy surface density 400 for V2X is lower during working times (between 8 am and 5 pm), when EVs are more likely to be in use and away from their respective WPT system. Therefore, the available battery energy and battery storage is reduced in the area during working times. The energy surface density 400 for V2X of the area 406 can be observed to be higher in the area during the early morning (6 am) and in the evening (5 pm and 9 pm) when EVs are more likely to be engaged with the respective WPT systems, for example while charging the EV battery. Contrastingly, the energy surface density 400 for G2V may be reduced during the early morning and evening (6am and 9 pm) when power producers are likely to be in less demand and renewable power production sources such as solar plants experience reduced operation, while being higher during the working day (8 am and 5 pm). The chart 412 of FIG. 4D demonstrates how the availability of energy for use in either G2V 408 or V2X 410 power transfer can fluctuate within an area of interest 406 over the period of a day.

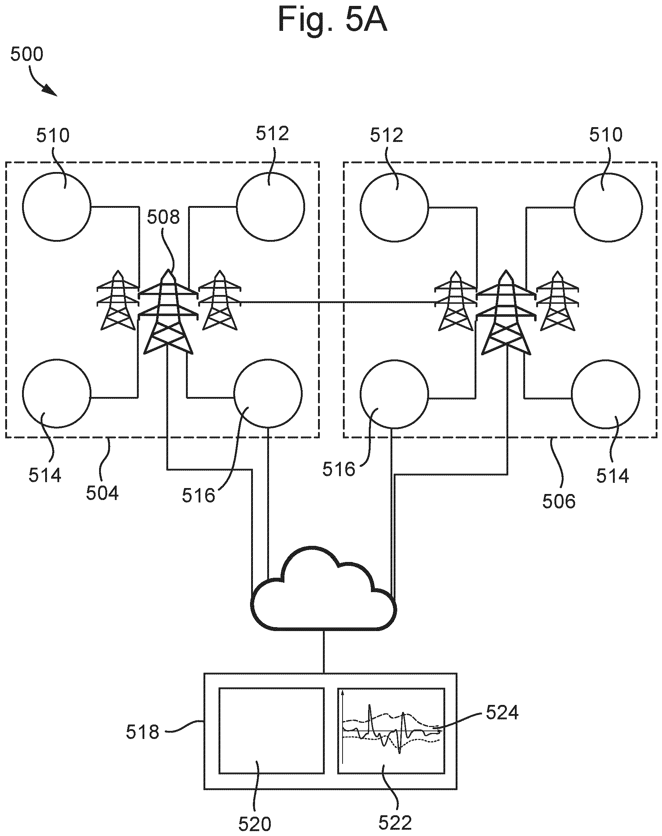

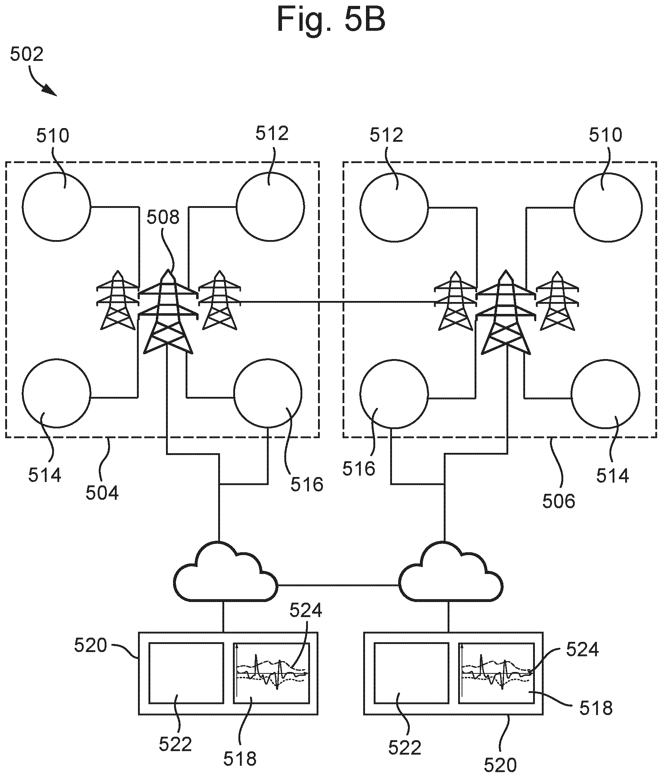

Referring to FIG. 5A and FIG. 5B, alternate example electrical grid monitoring systems 500, 502 for balancing power transfer between electric vehicles and an electrical grid of a region is shown in accordance with the present disclosure. In the alternate examples 500, 502 depicted, a first region 504 and a second region 506 are shown each comprising a respective electrical grid 508 supplied with power by respective power generators of the region including power plants 510 and renewable energy sources 512, the power to be consumed by respective power consumers 514 of the region. The systems 500, 502 each comprise a plurality of WPT systems 514 of the first region 504 and a plurality of WPT systems 516 of the second region 506. The electrical grid 508 of the first region 504 and the second region 506 are operably connected such that power may be transferred therebetween. In the example 500 of FIG. 5A, the system 500 comprises a single cloud based computing system 518 in communication with the plurality of WPT systems 102, the cloud-based computing system 518 configured to receive power transfer data from the plurality of WPT systems 514 of the first region 504 and the plurality of WPT systems 516 of the second region 506. The single computing system 518 is further configured to control a direction of power transfer of each WPT system of the plurality of WPT systems 514 of the first region 504 and the plurality of WPT systems 516 of the second region 506. The computing system 518 comprises a processor 520 and a memory 522, the memory 522 having stored thereon a probabilistic machine learning model 524 trained on the power transfer data obtained from the plurality of WPT systems 514 of the first region 504 and the plurality of WPT systems 516 of the second region 506. As described in relation to the example 100 of FIG. 1, the power transfer data used to train the probabilistic machine learning model 524 is indicative of an amount of power available for use from electric vehicle batteries and is additionally indicative of power storage available from electrical vehicle batteries, from each of the corresponding WPT systems of the plurality of WPT systems 514, 516 in each region. The power available for use, and the available power storage, are together indicative of a respective power surface density of the plurality of WPT systems 514, 516 within each region, and when modelled across time by way of the power transfer data, can be used to predict, using the model 524, a power surface density of each region at a particular time instance.

As described and shown in relation to FIG. 2D, when a net power availability of an electrical grid 508 within one of the regions 504, 506 approaches or exceeds an undersupply or oversupply threshold of the predicted power surface density for the same region 504, 506, it may be required to source external power or power storage to maintain grid balancing, for example by way of an electrical grid 508 of a connected region 504, 506. In the example 500 of FIG. 5A, when the net power availability of the electrical grid 508 of the first region 504, as determined by the processor 520, approaches or exceeds the predicted oversupply threshold of the first region 504, or a confidence interval thereof, the processor 520 is configured to identify one or more electrical power receivers external to the electrical grid 508 of the first region 504, for example the electrical grid 508 of the second region 506. The processor 520 may be further configured to determine that the identified power receivers (e.g. the electrical grid 508 of the second region 506) is capable of or configured for receiving the surplus power from the electrical grid 508 of the first region 504. In the case of the example 500 of FIG. 5A, the processor 520 may use the predicted power surface density of the second region 506 to determine whether the electrical grid 508 of the second region 506 is capable of or configured for receiving the surplus power from the electrical grid 508 of the first region 504. If the identified power receivers (e.g. the electrical grid 508 of the second region 506) is capable of or configured for receiving the surplus power, the processor 520 may then configure the electrical grid 508 of the first region 504 for providing the surplus power to the identified power receivers (e.g. the electrical grid 508 of the second region 506). As such, the system 500 may make use of available power storage in one region to counteract an oversupply of power in a different connected region. The use of the predicted power surface density of a region as described herein may therefore operate within an energy trading platform in accordance with the present disclosure.

In some scenarios, the determination by the processor 520 of whether the electrical grid 508 of the second region 506 is capable of or configured for receiving the surplus power from the electrical grid 508 of the first region 504 may be dependent on whether the net power availability of the electrical grid 508 of the second region 506 as determined by the processor 520, approaches or exceeds the predicted undersupply threshold of the second region 506, or a confidence interval thereof. As such the system 500 may be used for detecting an oversupply of power in one region and using the surplus power in the region to counteract an undersupply in a different connected region.

Similarly, when the net power availability of the electrical grid 508 of the first region 504, as determined by the processor 520, approaches or exceeds the predicted undersupply threshold of the first region 504, or a confidence interval thereof, the processor 520 is configured to identify one or more electrical power providers external to the electrical grid 508 of the first region 504, for example the plurality of WPT systems 516 of the second region 506. The processor 520 may be further configured to determine that the identified power providers (e.g. the plurality of WPT systems 516 of the second region 506) are capable of or configured for providing the required power to the electrical grid 508 of the first region 504, by way of the electrical grid of the second region 508. In the case of the example 500 of FIG. 5A, the processor 520 may use the predicted power surface density of the second region 506 to determine whether the plurality of WPT systems 516 of the second region 506 is capable of or configured for providing the required power to the electrical grid 508 of the first region 504. If the identified power providers (e.g. the plurality of WPT systems 516 of the second region 506) are capable of or configured for providing the required power, the processor 520 may then configure the electrical grid 508 of the first region 504 for receiving the required power from the identified power providers. In the specific example wherein the identified power providers are the plurality of WPT systems 516 of the second region 506, the processor may configure the plurality of WPT systems 516 for providing the required power to the electrical grid 508 of the second region 506. As such, the system 500 may make use of available power output from the plurality of WPT systems in one region to counteract an undersupply of power in a different connected region.

In some scenarios, the determination by the processor 520 of whether the plurality of WPT systems 516 of the second region 506 are capable of or configured for providing the required power to the electrical grid 508 of the first region 504 may be dependent on whether the net power availability of the electrical grid 508 of the second region 506 as determined by the processor 520, approaches or exceeds the predicted oversupply threshold of the second region 506, or a confidence interval thereof.

The alternate example 502 of FIG. 5B operates substantially as described for the example 500 of FIG. 5A, but wherein each corresponding region 504, 506 comprises a dedicated cloud-based computing system 518 having a processor and a memory storing a probabilistic machine learning model trained on power transfer data obtained from WPT systems within the same region. In the example 502 of FIG. 5B, electrical grid balancing of each region may be managed separately by the corresponding cloud-based computing system 518. The transfer of power between the electrical grids 508 of each region may be performed using an energy trading platform in accordance with the present disclosure.

In the examples described in relation to FIG. 1 to FIG. 5B, the power transfer systems of the example systems are wireless power transfer systems. Wireless inductive charging of EVs may provide numerous benefits such as improved convenience, safety, and reliability. It eliminates cabling that is often impedimental for pedestrians and prone for wear out, vandalism, and pollution. It can preserve urban aesthetics without compromising functionality and provide a suitable solution for autonomous parking. It may increase availability of parked vehicles for vehicle-to-grid (V2G) power transfer e.g., to balance the electrical grid as the demand for fluctuating renewable energy increases.

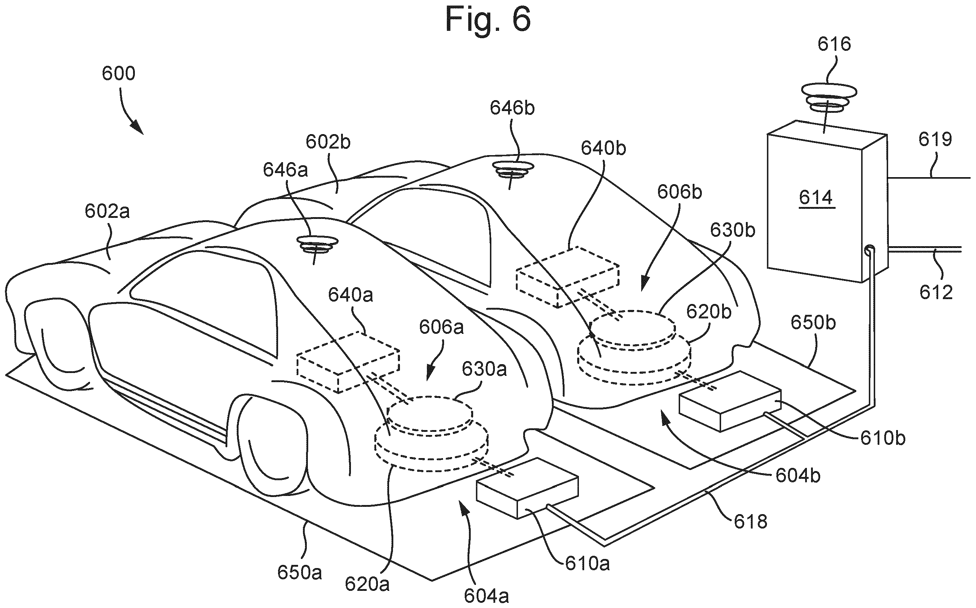

FIG. 6 illustrates an example of a parking facility 600 providing wireless charging services, including a plurality of WPT systems suitable for use in systems and methods of the present disclosure. Two wireless charging-enabled vehicles, 602a, 602b integrating WPT vehicle units 630a, 630b are each parked over a WPT ground unit, 620a, 620b. Both vehicle unit and ground unit include a WPT coil (not shown) sometimes also referred to as an induction coil configured to wirelessly transfer power based on the Faraday induction principle. Both vehicle unit and ground unit also include respective portions of a position detection system. In some implementations, the ground units are surface mount on the floor. In other implementations, the ground units are flush mount with the floor or buried in the ground (e.g., in the asphalt). The power converters 610a, 610b convert power received by WPT vehicle units 630a, 630b to a form suitable for charging the vehicle's traction battery (not shown). In some examples and as described in U.S. Patent US 9,561,730 B2, the power converters 640a, 640b may be integrated with power converters used for plug-in charging of the vehicle, commonly called on-board chargers (OBC), or other on-board vehicle components. The WPT ground units 620a, 620b are shown linked to external power converters 610a, 610b, each connected to a power supply bus 618. In some implementations, the power converters 610a, 610b are configured and mounted as a "wall box". In other implementations, the power converters or parts thereof are integrated into the WPT ground units. The power supply bus 618 is in turn connected to a central power distribution unit 614. In some implementations and operations, the central power distribution unit receives power from a power utility 612 sometimes referred to as "power grid" and provides DC power to the bus 618, and the power converters 610a, 610b are inverters, such as the multi-level inverter described in provisional U.S. Application 18/486,830, filed October 13, 2023, and incorporated here by reference. The power converters 610a, 610b, provide low-frequency (LF) power signals, such as the 85 kHz signals used for WPT according to the SAE J2954 standard, to the WPT ground units 620a, 620b, to turn into LF magnetic fields for WPT. In other examples, the power distribution unit 614 provides the LF signals directly to each WPT ground unit, and power converters 610a, 610b are simpler or not present. In yet other examples, the power distribution unit 614 and bus 618 are not present, and the power converters 610a, 610b are each connected directly to the power utility 612 and convert AC power from the utility to LF power for wireless power transfer. The combination of a WPT ground unit (e.g., 620a), a power converter (e.g., 610a), and any other ground-side electronics (not shown) constitutes a wireless charging station (e.g., 604a) as indicated in FIG. 6. In some cases, the WPT ground units 620a, 620b are also referred to as Ground Assembly Resonators (GAR) or ground assembly pads, and the wireless charging station is also referred to as a Ground Assembly (GA) or Electric Vehicle Supply Equipment (EVSE). Analogously, the WPT vehicle units 630a, 630b are sometimes referred to as Vehicle Assembly Resonators (VAR) or vehicle assembly pads and the combination of a WPT vehicle unit (e.g., 630a) and a power converter (e.g., 640a) and any other vehicle-side electronics (not shown) constitutes a Vehicle Assembly (VA) (e.g., 606a). Each of the power connections shown may be bidirectional, allowing the vehicles to discharge power from their batteries to the power utility 612 in a vehicle-to-grid (V2G), or other load in a vehicle-to-home (V2H), vehicle-to-vehicle (V2V) or similar arrangement (generally V2X).

FIG. 6 also illustrates vehicles 602a, 602b, and power distribution unit 614 providing wireless communication units 646a, 646b, and 616, respectively. The wireless communication unit 616 may be configured to wirelessly communicate with the vehicles 602a and 602b e.g., based on a Wi-Fi IEEE 802.11x standard. In SAE standard conformant wireless charging systems, this communication is used for exchanging data between the GA and VA for purposes of WPT control and safety. Further, the power distribution unit 614 provides an interface 619 configured to communicate with external entities (e.g., a charging operation center) via a communication backhaul (not shown). This backhaul may rely on radio communications (e.g., via communication unit 616), power line communications (e.g., via power utility 612), or any other line communications including fiber optical. In the example parking facility 600, wireless communication unit 616 is configured to serve multiple vehicles. In other parking facilities, each of the wireless charging stations 604a, 604b provide a wireless communication unit (not shown) configured to communicate with the respective vehicles 602a, 602b.

Beside the WPT coil, the WPT ground units 620a, 620b or the WPT vehicle units 630a, 630b, or both may include various sensors and detection systems (not shown). For example, they may include systems for detecting a positional relationship between the vehicle unit and the ground unit. The positional relationship is needed to guide the vehicle to the charging spot, to mutually align the vehicle-side and groundside WPT coils within the specified tolerance, and for pairing of a vehicle with a wireless charging station as needed to establish communication between the right entities in multiple vehicle multiple charging station scenarios. The ground unit may also include sensors and detection systems to determine presence of a foreign object that has the potential to heat up by induction heating or any hazardous events caused by an incandescent object on the surface of the ground unit. Further, it may include sensors and a detection system for determining presence of a living object e.g., a hand of a person or animals approaching a critical space beneath the vehicle where electromagnetic field exposure exceeds certain limits (e.g., based on IEEE or ICNIRP guidelines). Moreover, the ground unit may include sensors and a detection system for determining a presence of the vehicle or a type of the vehicle. In some implementations, sensors and detection systems or parts thereof may be external to the ground unit or vehicle unit.

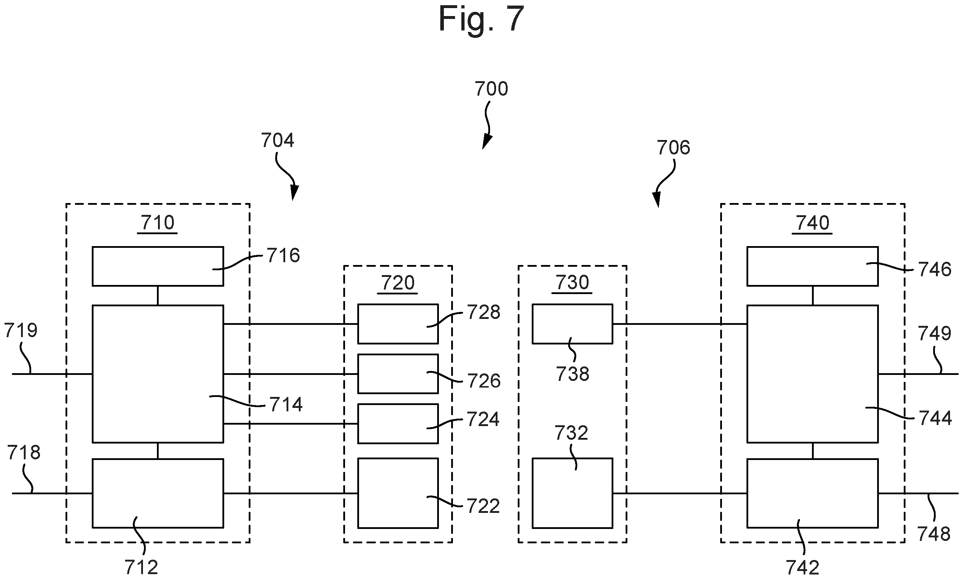

FIG. 7 is a hierarchical block diagram of an example WPT system 700 for wireless electric vehicle charging. At the top hierarchy level, the system 700 comprises a GA 704 and a VA 706 that may refer to the wireless charging station 604a and the VA 606a, respectively, of FIG. 6. The next lower level shows the GA 704 composed of a GA power conversion & control unit 710 and a WPT ground unit 720 (e.g., 620a of FIG. 6) and various connections between these blocks. Splitting the GA into two blocks implies implementations where the GA power conversion & control unit and the ground unit are physically separated (as illustrated in FIG. 6) and interconnected via a several meters long multiwire cable referred to herein as GA feeder cable (not shown). However, it should not exclude implementations where the GA power conversion & control unit is entirely or partially integrated in the ground unit forming one physical unit with a common housing (not shown).

At the third level, the GA power conversion & control unit includes a GA power converter 712 (e.g., 610a of FIG. 6), a GA controller 714, and a GA wireless communication unit 716 (e.g., 632a of FIG. 6). The ground unit 720 integrates a GA WPT coil 722 as well as various functions as needed for Foreign Object Detection (FOD), Living Object Detection (LOD), Vehicle Detection (VD), and Position Detection (PD) as previously discussed with reference to FIG. 6. In the example of FIG. 7, these functions are provided by a FOD unit 724, a LOD unit 726, and a GA PD unit 728, each configured and connected to the GA controller for exchanging data and control. In some implementations, these functions share or partially share one common hardware platform referred to as a multi-purpose detection system.

In an implementation conforming with the SAE standard, the GA wireless communication unit 716 is a Wi-Fi Access Point providing an air interface to a Wireless Local Area Network (WLAN) of a parking facility. Certain parking facilities (e.g., parking facility 600 of FIG. 6) provide a central Wi-Fi access point associated to multiple GAs. In such implementations, the GA wireless communication unit 716 is external to the GA 704. In another implementation, the GA wireless communication unit is integral part of the ground unit 720.

The GA WPT coil 722 may include a tuning & impedance matching network (not shown) forming a resonant circuit and the ground-unit is referred to as the GAR as previously mentioned. In other implementations, the tuning & impedance matching network or parts thereof are included in the GA power converter 712. Further, the GA controller 714 interfaces to the GA power converter 712 and the GA wireless communication unit 716 for data exchange and system control. It also provides a data interface 719 (e.g., Ethernet) to communicate with a system external entity e.g., via a backbone network as mentioned with reference to FIG. 6. Moreover, the GA power converter 712 disposes a power interface 718 for feeding or receiving AC or DC power as discussed with reference to FIG. 6.

At the second level, FIG. 7 shows the VA 706 composed of a WPT vehicle unit 730 (e.g., 606a, 606b of FIG. 6) connected to a VA power conversion & control unit 740. At a third level, the VA power conversion & control unit 740 comprises a VA power converter 742 (e.g., 610a of FIG. 6), a VA controller 744, and a VA wireless communication unit 746 (e.g., 632a of FIG. 6). The vehicle unit 730 comprises a VA WPT coil 732 and a VA PD unit 738, the vehicle-side counterpart of the GA PD unit 728 interfacing with the VA controller for data exchange and control. Splitting the VA into two blocks implies implementations where the VA power conversion & control unit and the vehicle unit are physically separated (as illustrated in FIG. 6) and interconnected via a multiwire cable referred to herein as VA feeder cable (not shown). However, this should not exclude implementations where the VA power conversion & control unit 740 is entirely or partially integrated in the vehicle unit 730 forming one physical unit with a common housing (not shown).

In a standard conforming implementation, the VA wireless communication unit 746 is a Wi-Fi Client. As with the GA wireless communication unit, the VA wireless communication unit may be external to the VA 706 e.g., mounted anywhere on the vehicle or parts or it may be partially or fully integrated into the vehicle unit.

In some implementations, the VA WPT coil 732 includes a tuning & impedance matching network (not shown) forming a resonant circuit and the vehicle unit is referred to as the VAR as previously mentioned. Further, the VA controller interfaces to the VA power converter and the VA wireless communication unit for data exchange and control. It also provides a line communication interface 749, e.g., a CAN bus interface to communicate with an external vehicle onboard entity. Moreover, the VA power converter disposes a power interface 748 for feeding or receiving DC power as previously discussed with reference to FIG. 6.

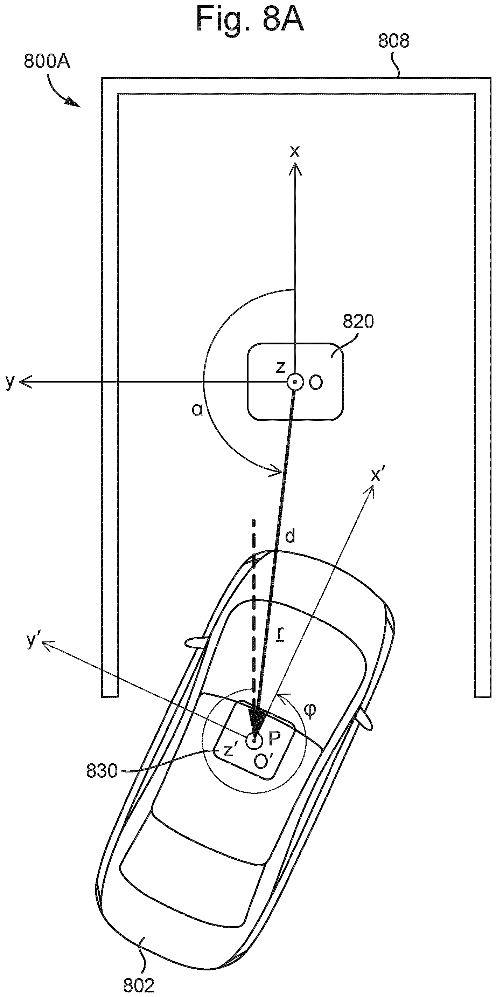

FIG. 8A shows an example parking space and a parking scenario 800A illustrating a positional relationship between a vehicle unit 830 (e.g., 606a, 606b of FIG. 6 or 730 of FIG. 7) and a ground unit 820 (e.g., 604a of FIG. 6 or 720 of FIG. 7) as it may be needed for guidance, alignment, and pairing. FIG. 8A represents the positional relationship in a ground-based coordinate system defined by perpendicular x- y-, and z-axes and having its origin O in the ground unit 820. The x- and y-axes (also referred to as the horizontal axes) span a parallel plane to a parking space defined by road markings 808. The z-axis (vertical axis) points towards the zenith assuming a right-hand oriented coordinate system. The x-axis is aligned in parallel to a longitudinal axis of the parking space pointing towards the rear of the parking space.

The vehicle unit 830 mounted on a vehicle 802 may also be associated with a vehicle-based coordinate system defined by perpendicular x'-, y'-, and z'-axes and having its origin O' in the vehicle unit. The x'- and y'-axes span a plane substantially parallel to the parking space, depending on a tilt of the vehicle-unit relative to the floor, while the z'-axis essentially points towards the zenith assuming a right-hand oriented coordinate system. The x'-axis is assumed aligned with a longitudinal axis of the vehicle pointing in driving direction.

The origins O and O' may correspond to a magnetic center point of the ground unit and the vehicle unit, respectively, as explained in U.S. Patent 11,394,253 incorporated here by reference. In some implementations, the vertical coordinate (e.g., z or z') is omitted in a positional relationship as needed for purposes of guidance and alignment. However, it may be used in a process of determining a positional relationship e.g., if a z-height of the vehicle unit 830 matters.

In a ground-based coordinate system omitting z, the positional relationship between the vehicle unit 830 and the ground unit 820 may be defined by the position of the origin O' also denoted P and an angle of rotation $\phi$ measured from the dashed line parallel to the x-axis as indicated in FIG. 8A. Using Cartesian coordinates, the position P may be represented by a vector $r = (x_p, y_p)$. In a polar representation, P may be defined by a distance $d$ = square root of $(x_p^2 + y_p^2)$ and an angle $\alpha$ = arctan $(y_p/x_p)$ measured from the x-axis. The angle $\phi$ is also referred herein as the vehicle rotation relative to the parking space. The position P and angle $\phi$ are also referred herein as the pose of the vehicle unit or simply, the pose of the vehicle.

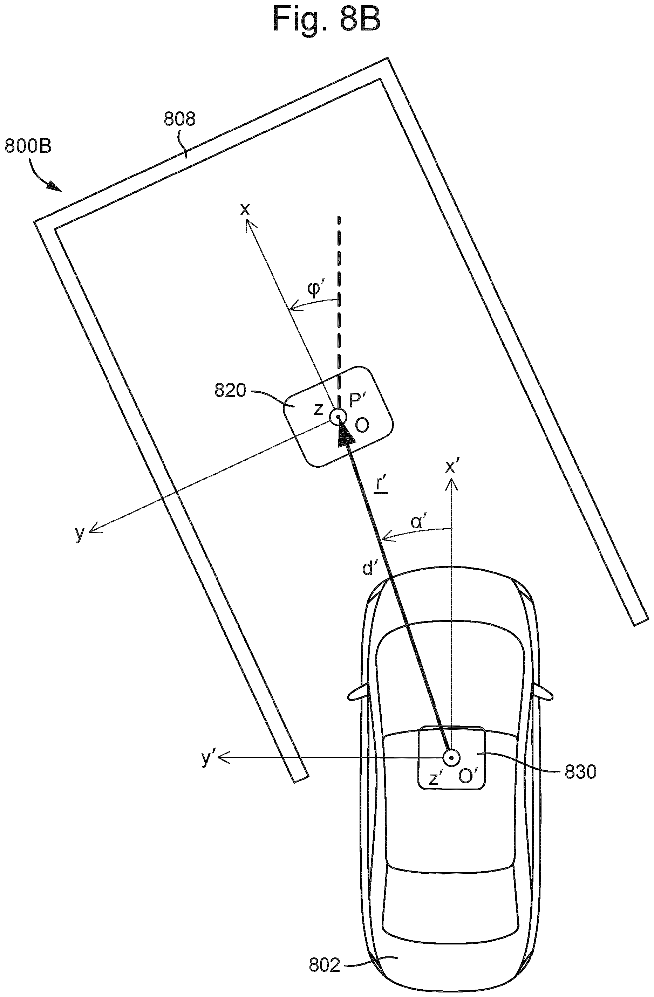

FIG. 8B shows an example parking space and a parking scenario 800B illustrating another positional relationship between a ground unit 820 (e.g., 604a of FIG. 6) comprising a ground pad 850 of the GA PD, and a vehicle unit 830 (e.g., 606a, 606b of FIG. 6) as it may be needed for guidance, alignment, and pairing. FIG. 8B represents this positional relationship in a vehicle-based coordinate system defined by perpendicular x'- y'-, and z'-axes and having its origin O' as described above with reference to FIG. 8A.

The ground unit 820 is associated with the ground-based coordinate system defined by perpendicular x-, y-, and z-axes and having its origin O in the ground unit and aligned with road markings 808 as described above with reference to FIG. 8A. In the vehicle-based coordinate system omitting z', the positional relationship between the ground unit 820 and the vehicle unit 830 may be defined by the position of the origin O also denoted P' and an angle of rotation $\phi'$ measured from the dashed line parallel to the x'-axis as indicated in FIG. 8B. Using Cartesian coordinates, the position P' may be represented by a vector $\underline{r}' = (x_p', y_p')$. In a polar representation, P' may be defined by a distance d' = square root of $(x_p'^2 + y_p'^2)$ and an angle $\alpha' = \arctan (y_p'/x_p')$ measured from the x-axis. The angle $\phi'$ is also referred herein as the rotation of the ground unit relative to the vehicle. While the distances d' and d are identical, the angles $\alpha'$ and $\alpha$ generally differ. The position P' and angle $\phi'$ are also referred herein as the pose of the ground-unit or simply, the pose of the parking space.

In some implementations of a guidance and alignment system e.g., using a graphical user interface (GUI) abord the vehicle, the pose of the vehicle unit is represented in a ground-based coordinate system. In other implementations, the pose of the ground unit is displayed in a vehicle-based coordinate system. Various implementations of the vehicle onboard GUI are disclosed in U.S. Patent 9,971,353 incorporated herein as reference. In an example implementation of a guidance and alignment system, the pose of the vehicle unit 830 is determined in a ground-based coordinate system and then mathematically transformed into the pose of the ground-unit 820 as described in U.S. Patent 10,343,537 incorporated herein as reference.

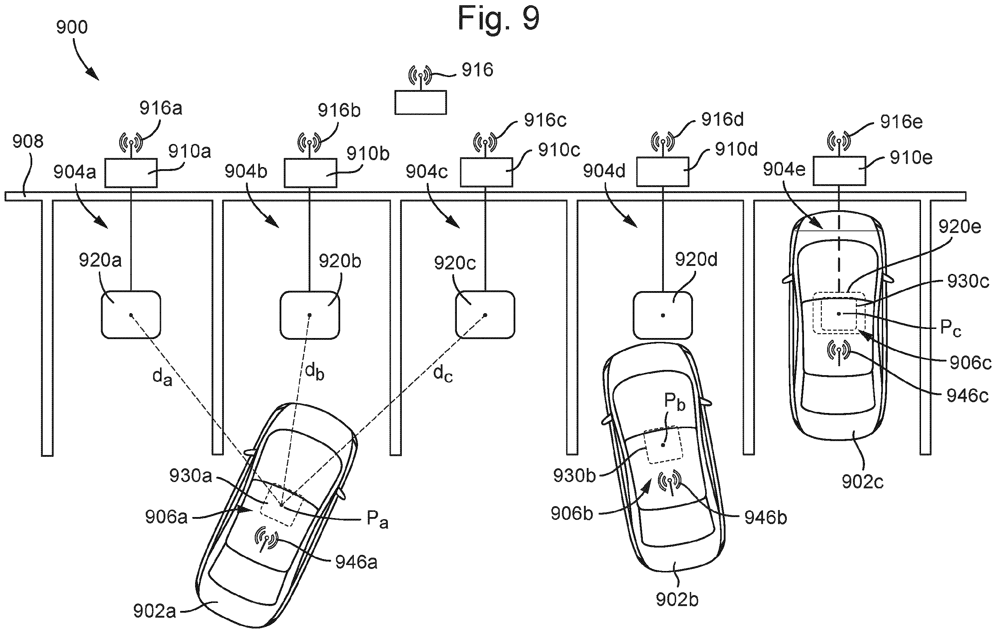

FIG. 9 shows a parking facility 900 illustrating an example multiple parking space scenario with multiple vehicles 902a, 902b, 902c. Parking spaces are outlined by road markings 908. Parking spaces are equipped with wireless charging stations (GAs) referring to GAs 904a, 904b, 904c, 904d, 904e. The plurality of GAs is sometimes also referred to as ground infrastructure. The GAs include respective WPT ground units 920a, 920b, 920c, 920d, 920e suitably positioned in the parking spaces and connected to respective GA power conversion & control units 910a, 910b, 910c, 910d, 910e implemented in some examples as "wall boxes" as described with reference to FIG. 7. Further, each ground unit integrates a GA PD unit (e.g., GA PD unit 728 of FIG. 7) configured to interact with a vehicle-side reader assembly counterpart for determining a positional relationship as described herein. Moreover, the GAs provide a respective GA wireless communication unit 916a, 916b, 916c, 916d, 916e configured to communicate with vehicles (e.g., 902a, 902b, 902c). FIG. 9 also shows a central GA wireless communication unit 916 (e.g., 616 of FIG. 6) as part of the ground infrastructure connected to each of the GAs (connections not shown). In some implementations, the central communication unit is configured as a communication node of a backbone network (not shown). In other implementations, it is configured to communicate with vehicles (e.g., 902a, 902b, 902c).

Further, FIG. 9 indicates that the vehicles 902a, 902b, 902c are equipped with VAs 906a, 906b, 906c. The VAs include respective WPT vehicle units 930a, 930b, 930c suitably mounted on the vehicles and connected to respective VA power conversion & control units (e.g., 740 of FIG. 7, not shown) as described with reference to FIG. 7. Further, each vehicle unit integrates a VA PD reader assembly unit (e.g., VA PD unit 738 of FIG. 7, not shown) configured to interact with the ground-side counterpart for determining the positional relationship as described herein. Moreover, the VAs provide a respective VA wireless communication unit 946a, 946b, 946c configured to communicate with any of the GA wireless communication units (e.g., 916a, 916b, 916c, 916d, 916e).

In another aspect, FIG. 9 displays the vehicles 902a and 902b heading towards the ground unit 920b and 920d, respectively, and vehicle 902c parked over the ground unit 930e e.g., for charging. From the perspective of the vehicle 902a, the ground unit 920b is also referred herein to as the target ground unit and the GA 904b as the target GA. From the perspective of the ground unit 920b, the vehicle 902a is also referred to as the vehicle attempting for being charged from. Likewise, the GA 904d and its ground unit 920d are referred to as the target GA and the target ground unit, respectively, of the vehicle 902b, which in turn may also be referred to as the vehicle attempting for being charged from GA 904d.

As mentioned with reference to FIG. 6, standard compliant WPT for electric vehicles requires wireless communications between a target GA (e.g., GA 904b) and a vehicle (e.g., 902a). In a multiple parking space multiple vehicle scenario such as illustrated in FIG. 9 by example, it is necessary to assure that the VA (e.g., 906a) is actually communicating with the target GA (e.g., 904b), and not another neighboring GA (e.g., 904d). The VA may establish wireless network communications with a GA of an adjacent parking space, falsely determining that it has established communication with its target GA. When the VA requests power and does not receive it (because it is in communication with the wrong GA), the VA may not detect the source of the problem. Likewise, the GA of the adjacent parking space may detect a fault because it is attempting to provide power and recognizing no load. This problem may be referred to as "cross-connect." In addition to the primary function of providing power to a vehicle being impossible in a cross-connect situation, additional functions such as PD for guidance and alignment, FOD, and LOD may not operate properly, if at all, when wireless communications are not established between the VA and its target GA.

As previously mentioned, guidance, alignment, and pairing in the example multiple parking space scenario illustrated in FIG. 9 requires the VA (e.g., VA 906a) to disambiguate between the target GA (e.g., GA 904b) and neighboring GAs (e.g., 904a, 904c, 904d, 904e). Pairing for wireless communications (e.g., via Wi-Fi) additionally requires the VA to disambiguate between the GA wireless communication unit (e.g., 946b) associated to the target GA and the GA wireless communication units associated to neighboring GAs. Alternatively, it requires the GA (e.g., 604b) to disambiguate the vehicle (e.g., 902a), attempting for being charged from, from other vehicles (e.g., 902a, 902c) as well as the associated VA wireless communication unit (e.g., 946a) from the VA communication units associated to other vehicles.

Moreover, guidance and alignment may require PD to periodically determine a positional relationship between the vehicle unit (e.g., 930a) and the ground unit (e.g., 920b) in a suitable coordinate system, at a suitable update rate, and over a suitable distance range. In some implementations, the vehicle (e.g., 902a) receives ten position updates per second for guidance beginning at a distance of 5 m and in a vehicle-based coordinate system with reference to FIG. 8B. At a distance of 1 m, the update rate is increased e.g., to twenty for alignment. Use of WPT systems, for example incorporating a PD system as described in the present examples, may ensure regular effective positioning of vehicles such that they may contribute or receive power from the electrical grid in accordance with the present disclosure. Incorporating the described communication systems may further improve the collection of power transfer data used to train the probabilistic machine learning model or inform a battery maintenance system as described herein.

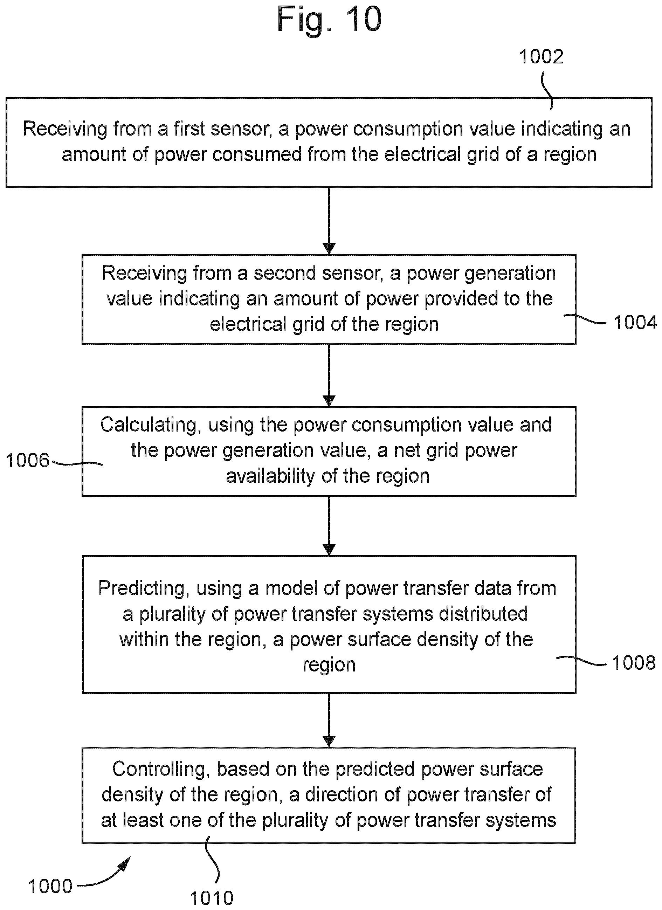

Referring to FIG. 10 depicts steps of an example method 1000 for balancing power transfer between electric vehicles and an electrical grid in accordance with the present disclosure. The method 1000 comprises the steps of: receiving from a first sensor, a power consumption value indicating an amount of power consumed from the electrical grid of a region 1002; receiving from a second sensor, a power generation value indicating an amount of power provided to the electrical grid of the region 1004; calculating, using the power consumption value and the power generation value, a net grid power availability of the region 1006; predicting, using a model of power transfer data from a plurality of power transfer systems distributed within the region, a power surface density of the region 1008; and controlling, based on the predicted power surface density of the region, a direction of power transfer of at least one of the plurality of power transfer systems 1010. It will be appreciated that the method 1000 may be performed by any suitable system such as those described herein, including the examples of FIG. 1 to FIG. 9.

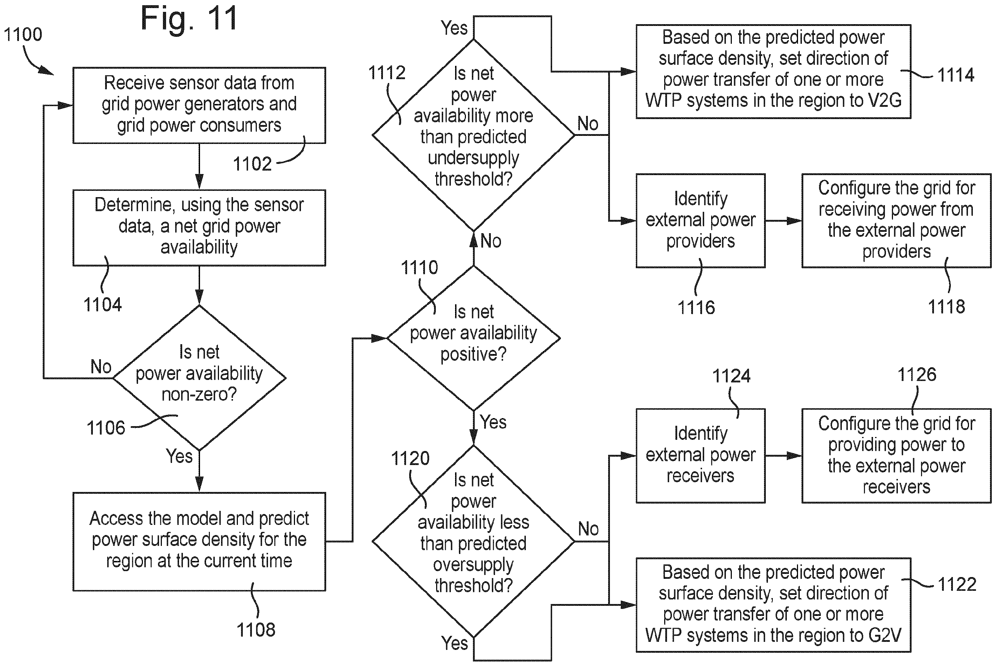

Referring to FIG. 11, steps of an alternate example method 1100 are shown for balancing power transfer between electric vehicles and an electrical grid in accordance with the present disclosure. In the method 1100 shown, sensor data from grid power generators and grid power consumers within a region is received at a processor of a cloud-based computing system 1102. The processor subsequently determines, using the sensor data, a net power availability of an electrical grid of a region 1104. In the event that the net power availability is determined to be zero, such that there is no significant oversupply or undersupply of power to the electrical grid, the cloud-based computer system continues to monitor the sensor data for spikes or troughs in net power availability 1102. If, however, it is determined by the processor that the net power availability of the electrical grid of the region is non-zero 1106, the processor may then access a probabilistic machine learning model trained on WPT system power transfer data within the region, and may use the model to predict an expected power surface density of WPT systems within the region 1108. The processor may then control the direction of power transfer of one or more WPT systems within the region in accordance with whether, and to what extent, the net power availability of the electrical grid is positive (indicating an oversupply of power to the electrical grid when compared with power consumption) or negative (indicating an undersupply of power to the electrical grid compared with power consumption) 1110.

If the net power consumption is negative, indicating an undersupply of power to the electrical grid, the processor may confirm, based on the predicted power surface density, that the WPT systems of the region are predicted to provide sufficient stored battery power to counteract the power undersupply to the electrical grid. As such the processor may then determine whether the net power availability is higher than a minimum predicted undersupply threshold of the power surface density 1112, indicating that the WPT systems of the region are predicted to be able to transfer sufficient power to the grid, in the form of battery power stored in electric vehicle batteries engaged with the WPT systems, to counteract the power undersupply. If the net power availability is determined by the processor to be more than predicted undersupply threshold, the processor may therefore, based on the predicted power surface density, set a direction of power transfer of one or more WPT systems in the region such that power is transferred from vehicle batteries to the electrical grid (V2G) 1114. Should the processor instead determine that the net power availability is less than predicted undersupply threshold, or a confidence interval thereof, indicating that the WPT systems are predicted to not be able to provide enough battery power to the grid to counteract the deficit, the processor may simultaneously set the direction of net power transfer to V2G 1114 as discussed, while identifying further external power providers 1116, which may be located on a separate electrical grid and in a different region. Such identification may comprise brokering of a power trade with the external power providers, for example using an energy trading platform such as that discussed herein. Following the identification of suitable external power providers, the processor may then configure the electrical grid for receiving power from the external power providers 1118.

If the net power consumption is positive, indicating an oversupply of power to the electrical grid, the processor may confirm, based on the predicted power surface density, that the WPT systems of the region comprise sufficient battery power storage to receive the power oversupply from the electrical grid. As such the processor may then determine whether the net power availability is lower than a maximum predicted oversupply threshold of the power surface density 1120, indicating that the WPT systems of the region are predicted to be able to transfer sufficient power from the grid to available battery storage of electric vehicle batteries engaged with the WPT systems, to counteract the power oversupply. If the net power availability is determined by the processor to be less than predicted oversupply threshold, the processor may therefore, based on the predicted power surface density, set a direction of power transfer of one or more WPT systems in the region such that power is transferred from the electrical grid to vehicle batteries (G2V) 1122. Should the processor instead determine that the net power availability is more than the predicted oversupply threshold, or a confidence interval thereof, indicating that the WPT systems are predicted to not be able to provide enough battery storage capacity to receive the surplus power provided to the grid, the processor may simultaneously set the direction of net power transfer to G2V 1120 as discussed, while identifying further external power receivers 1124, which may be located on a separate electrical grid and in a different region. Such identification may comprise brokering of a power trade with the external power receivers, for example using an energy trading platform such as that discussed herein. Following the identification of suitable external power receivers, the processor may then configure the electrical grid for providing power to the external power receivers 1126.

Further examples will be appreciated which do not depart from the scope of the present disclosure. Any suitable combination of the features described herein may be incorporated into examples while remaining within the scope of the appended claims. For example, while the examples described herein in relation to FIG. 1 to FIG. 11 incorporate wireless power transfer systems, examples will be appreciated wherein the power transfer systems require mechanical connection to an electric vehicle. Additionally, while the examples described implement a probabilistic machine learning model trained on power transfer data, examples may implement any suitable model of the power transfer data.

The present disclosure can be further understood with reference to the following paragraphs:

Example 1: An electrical grid monitoring system for balancing power transfer between electric vehicles and an electrical grid, the system comprising: a plurality of power transfer systems located within the region, each power transfer system configured to enable the transfer of power between a battery of an electric vehicle and the electrical grid; a memory storing a model of power transfer obtained from the plurality of power transfer systems; and a processor configured to use the model to predict, based on the power transfer data, a power status of the region at a time instance; wherein the processor is further configured to set a direction of net power transfer of the plurality of power transfer systems based on the predicted power status of the region at the time instance.

Example 2: The electrical grid monitoring system of Example 1, wherein the predicted power status comprises at least one of: a power surface density of the region at the time instance; an energy surface density of the region at the time instance.

Example 3: The electrical grid monitoring system of Example 1 or Example 2, wherein the predicted power status is based at least in part on a direction of net power transfer of the plurality of power transfer systems.

Example 4: The electrical grid monitoring system of Example 1, Example 2 or Example 3, wherein the model is a machine learning model trained on the power transfer data.

Example 5: The electrical grid monitoring system of any one of Examples 1 to 4, wherein at least a subset of the plurality of power transfer systems are wireless power transfer systems configured to transfer the power wirelessly between the electric vehicle and the electrical grid.

Example 6: The electrical grid monitoring system of any one of Examples 1 to 5, wherein the power transfer data comprises, for each power transfer system, at least one of: a location of the power transfer system in the region; a time at which the electric vehicle is engaged with the power transfer system; a duration for which the electric vehicle is engaged with the power transfer system; a duration of charging of the battery of the electric vehicle; a battery characteristic of the battery; an environmental characteristic of the power transfer system.

Example 7: The electrical grid monitoring system of Example 6, wherein the battery characteristic is one or more characteristics selected from: a battery type; a battery manufacturer; a battery model number; a battery digital twin; a battery charge method; a wireless power transfer operational range; a state of charge; a state of health; a state of function; a capacity; a voltage; a current; a temperature; a pressure; an internal resistance; a threshold charging current; a threshold charging voltage; a threshold charging impedance; a threshold charging resistance; a threshold charging rate; a C-rate; an E-rate; a battery energy density; a battery power density; a battery cycle life; a fault detection; a diagnostic status.

Example 8: The electrical grid monitoring system of any one of Examples 1 to 7, wherein the direction of net power transfer is one selected from: electrical grid to vehicle (G2V) transfer; or vehicle to external power receiver (V2X) transfer.

Example 9: The electrical grid monitoring system of Example 8, wherein the external power receiver is the electrical grid.

Example 10: The electrical grid monitoring system of Example 8 or Example 9, further comprising: one or more power supply sensors configured to detect an amount of power supplied to the electrical grid; and one or more power consumption sensors configured to detect an amount of power consumed from the electrical grid; and wherein the processor is further configured to determine, based on the detected amount of power supplied to the electrical grid, and the detected amount of power consumed from the electrical grid , a net power availability of the electrical grid.

Example 11: The electrical grid monitoring system of Example 10, wherein when the net grid power availability is positive, the processor is configured to set the direction of power transfer of at least one of the plurality of power transfer systems to G2V; and when the net grid power availability is negative, the processor is configured to set the direction of power transfer of at least one of the plurality of power transfer systems to V2X.

Example 12: The electrical grid monitoring system of Example 11, wherein the prediction of the power status of the region at the time instance, based on the power transfer data, further comprises predicting an oversupply threshold, the oversupply threshold comprising a predicted maximum amount of available vehicle battery capacity to receive the G2V power transfer at the time instance.

Example 13: The electrical grid monitoring system of Example 12, wherein the prediction of the power status of the region at the time instance based on the power transfer data further comprises predicting an undersupply threshold, the undersupply threshold comprising a predicted maximum amount of available vehicle battery power to provide the V2X power transfer at the time instance.

Example 14: The electrical grid monitoring system of Example 13, wherein the processor is further configured to detect that the net grid power availability is above a predefined confidence interval of the oversupply threshold, or below a predefined confidence interval of the undersupply threshold; and wherein the processor is further configured to, in response to the detection, calculate a real-time power status of the region at the time instance.

Example 15: The electrical grid monitoring system of Example 14, wherein the processor is further configured to, in response to the detection that the net grid power availability is above a predefined confidence interval of the oversupply threshold: identify one or more electrical power receivers that are external to the electrical grid, and configured to receive power from the electrical grid; and configure the electrical grid to provide an amount of power to the one or more electrical power receivers.

Example 16: The electrical grid monitoring system of Example 15, wherein the plurality of power transfer systems are located within a first region, and wherein the one or more electrical power receivers comprise an electrical grid of a second region.

Example 17: The electrical grid monitoring system of Example 16, wherein the identifying of the one or more electrical power receivers is further in response to a detection that the net grid power availability of the electrical grid of the second region is below the predefined confidence interval of the undersupply threshold.

Example 18: The electrical grid monitoring system of Example any one of Examples 14 to 17, wherein the processor is further configured to, in response to the detection that the net grid power availability is below a predefined confidence interval of the undersupply threshold: identify one or more electrical power providers that are external to the electrical grid, and configured to provide power to the electrical grid; and configure the electrical grid to receive an amount of power from the one or more electrical power providers.

Example 19: The electrical grid monitoring system of Example 18, wherein the plurality of power transfer systems are located within a first region, and wherein the one or more electrical power receivers comprise an electrical grid of a second region.

Example 20: The electrical grid monitoring system of Example 19, wherein the identifying of the one or more electrical power providers is further in response to a detection that the net grid power availability of the electrical grid of the second region is above the predefined confidence interval of the oversupply threshold.

Example 21: A method for balancing power transfer between electric vehicles and an electrical grid, the method comprising: receiving from a first sensor, a power consumption value indicating an amount of power consumed from the electrical grid of a region; receiving from a second sensor, a power generation value indicating an amount of power provided to the electrical grid of the region; calculating, using the power consumption value and the power generation value, a net grid power availability of the region; predicting, using a model of power transfer data from a plurality of power transfer systems distributed within the region, a power status of the region; and controlling, based on the predicted power status of the region, a direction of power transfer of at least one of the plurality of power transfer systems.

Example 22: The method of Example 21, wherein the model is a machine learning model, the method further comprising: training, using the power transfer data, the machine learning model to predict, based on the power transfer data, the power status of the region at a time instance.

Example 23: The method of Example 21 or of Example 22, wherein the method is performed using a system of any one of Examples 1 to 20.

Example 24: A non-transitory computer readable storage medium comprising computer-executable instructions stored thereon, the computer executable instructions configured, when executed by a processor, to: receive from a first sensor, a power consumption value indicating an amount of power consumed from the electrical grid of a region; receive from a second sensor, a power generation value indicating an amount of power provided to the electrical grid of the region; calculate, using the power consumption value and the power generation value, a net grid power availability of the region; predict, using a model of power transfer data from a plurality of power transfer systems distributed within the region, a power status of the region; and control, based on the predicted power status of the region, a direction of power transfer of at least one of the plurality of power transfer systems.

Example 25: A method for balancing power transfer between electric vehicles and an electrical grid, the method comprising: receiving power transfer data from a plurality of power transfer systems distributed within a region, the power transfer data indicating the presence of the electric vehicle engaged with the power transfer system for permitting power transfer between the electric vehicle and the electrical grid, and time data associated with the presence; and training, using the power transfer data, a machine learning model to predict, based on the power transfer data, a power status of the region at a corresponding time instance.

The systems and processes described above are intended to be illustrative and not limiting. One skilled in the art would appreciate that the steps of the processes discussed herein may be omitted, modified, combined, and/or rearranged, and any additional steps may be performed without departing from the scope of the invention. More generally, the above disclosure is meant to be illustrative and not limiting. Only the claims that follow are meant to set bounds as to what the present invention includes. Furthermore, it should be noted that the features and limitations described in any one example may be applied to any other example herein, and flowcharts or examples relating to one example may be combined with any other example in a suitable manner, done in different orders, or done in parallel. In addition, the systems and methods described herein may be performed in real time. It should also be noted that the systems and/or methods described above may be applied to, or used in accordance with, other systems and/or methods.

## Claims

1. An electrical grid monitoring system for balancing power transfer between electric vehicles and an electrical grid, the system comprising:

    a plurality of power transfer systems located within the region, each power transfer system configured to enable the transfer of power between a battery of an electric vehicle and the electrical grid;
    a memory storing a model of power transfer obtained from the plurality of power transfer systems; and
    a processor configured to use the model to predict, based on the power transfer data, a power status of the region at a time instance;
    wherein the processor is further configured to set a direction of net power transfer of the plurality of power transfer systems based on the predicted power status of the region at the time instance.

2. The electrical grid monitoring system as claimed in claim 1, wherein the predicted power status comprises at least one of: a power or a power surface density of the region at the time instance; an energy or an energy surface density of the region at the time instance.

3. The electrical grid monitoring system as claimed in claim 1 or claim 2, wherein the predicted power status is based at least in part on a direction of net power transfer of the plurality of power transfer systems.

4. The electrical grid monitoring system as claimed in claim 1, claim 2 or claim 3, wherein the model is a machine learning model trained on the power transfer data.

5. The electrical grid monitoring system as claimed in any one of claims 1 to 4, wherein at least a subset of the plurality of power transfer systems are wireless power transfer systems configured to transfer the power wirelessly between the electric vehicle and the electrical grid.

6. The electrical grid monitoring system as claimed in any one of the preceding claims, wherein the power transfer data comprises, for each power transfer system, at least one of: a location of the power transfer system in the region; a time at which the electric vehicle is engaged with the power transfer system; a duration for which the electric vehicle is engaged with the power transfer system; a duration of charging of the battery of the electric vehicle; a battery characteristic of the battery; an environmental characteristic of the power transfer system.

7. The electrical grid monitoring system as claimed in any one of the preceding claims, wherein the direction of net power transfer is one selected from: electrical grid to vehicle (G2V) transfer; or vehicle to external power receiver (V2X) transfer.

8. The electrical grid monitoring system as claimed in claim 8 or claim 9, further comprising:

   one or more power supply sensors configured to detect an amount of power supplied to the electrical grid; one or more power consumption sensors configured to detect an amount of power consumed from the electrical grid; and
   wherein the processor is further configured to determine, based on the detected amount of power supplied to the electrical grid, and the detected amount of power consumed from the electrical grid, a net power availability of the electrical grid; and
   wherein when the net grid power availability is positive, the processor is configured to set the direction of power transfer of at least one of the plurality of power transfer systems to G2V; and when the net grid power availability is negative, the processor is configured to set the direction of power transfer of at least one of the plurality of power transfer systems to V2X.

9. The electrical grid monitoring system as claimed in claim 8, wherein the prediction of the power status of the region at the time instance, based on the power transfer data, further comprises predicting one or more of:

   i. an oversupply threshold, the oversupply threshold comprising a predicted maximum amount of available vehicle battery capacity to receive the G2V power transfer at the time instance; or
   ii. an undersupply threshold, the undersupply threshold comprising a predicted maximum amount of available vehicle battery power to provide the V2X power transfer at the time instance.

10. The electrical grid monitoring system as claimed in claim 9, wherein the processor is further configured to detect that the net grid power availability is above a predefined confidence interval of the oversupply threshold, or below a predefined confidence interval of the undersupply threshold; and wherein the processor is further configured to, in response to the detection, calculate a real-time power status of the region at the time instance.

11. The electrical grid monitoring system as claimed in claim 10, wherein the processor is further configured to, in response to the detection that the net grid power availability is above a predefined confidence interval of the oversupply threshold:

   identify one or more electrical power receivers that are external to the electrical grid and configured to receive power from the electrical grid; and

configure the electrical grid to provide an amount of power to the one or more electrical power receivers.

12. The electrical grid monitoring system as claimed in claim 10 or claim 11, wherein the processor is further configured to, in response to the detection that the net grid power availability is below a predefined confidence interval of the undersupply threshold:

identify one or more electrical power providers that are external to the electrical grid, and configured to provide power to the electrical grid; and
configure the electrical grid to receive an amount of power from the one or more electrical power providers.

13. A method for balancing power transfer between electric vehicles and an electrical grid, the method comprising:

receiving from a first sensor, a power consumption value indicating an amount of power consumed from the electrical grid of a region;
receiving from a second sensor, a power generation value indicating an amount of power provided to the electrical grid of the region;
calculating, using the power consumption value and the power generation value, a net grid power availability of the region;
predicting, using a model of power transfer data from a plurality of power transfer systems distributed within the region, a power status of the region; and
controlling, based on the predicted power status of the region, a direction of power transfer of at least one of the plurality of power transfer systems.

14. A non-transitory computer readable storage medium comprising computer-executable instructions stored thereon, the computer executable instructions configured, when executed by a processor, to:

receive from a first sensor, a power consumption value indicating an amount of power consumed from the electrical grid of a region;
receive from a second sensor, a power generation value indicating an amount of power provided to the electrical grid of the region;
calculate, using the power consumption value and the power generation value, a net grid power availability of the region;
predict, using a model of power transfer data from a plurality of power transfer systems distributed within the region, a power status of the region; and
control, based on the predicted power status of the region, a direction of power transfer of at least one of the plurality of power transfer systems.

15. A method for balancing power transfer between electric vehicles and an electrical grid, the method comprising:

receiving power transfer data from a plurality of power transfer systems distributed within a region, the power transfer data indicating the presence of the electric vehicle engaged with the power transfer system for permitting power transfer between the electric vehicle and the electrical grid, and time data associated with the presence; and
training, using the power transfer data, a machine learning model to predict, based on the power transfer data, a power status of the region at a corresponding time instance.

Fig. 1

EP 4 707 028 A1

# Fig. 2A

200

Net Power Generation (First sensor)

Time

# Fig. 2B

202

Net Power Generation (Second sensor)

Time

# Fig. 2C

204

Time

Net Power Consumption (Third sensor)

## Fig. 2D

## Fig. 2E

# Fig. 3A

302

Switzerland

# Fig. 3B

310

308

304

V2X (e.g., V2G)

G2V

306

300

10

Battery Cloud Power Surface Density [kW/km²]

6 a.m.

8 a.m.

5 p.m.

9 p.m.

0

Time

Fig. 3C

300

306

V2X
Power Surface
Density [kW/km²]

100

0

Fig. 3D

300

306

G2V
Power Surface
Density [kW/km²]

100

0

Fig. 3E

312

Power

308, G2V

310, V2X

Time

# Fig. 4A

Fig. 4B

Fig. 4C

Fig. 4D

# Fig. 5A

# Fig. 5B

502

510    512    512    510

508

514    516    516    514
504         506

524

520    522    518    522    520    518    524

Fig. 6

Fig. 7

# Fig. 8A

# Fig. 8B

# Fig. 9

EP 4 707 028 A1

# Fig. 10

1002

Receiving from a first sensor, a power consumption value indicating an amount of power consumed from the electrical grid of a region

Receiving from a second sensor, a power generation value indicating an amount of power provided to the electrical grid of the region

1004

1006

Calculating, using the power consumption value and the power generation value, a net grid power availability of the region

Predicting, using a model of power transfer data from a plurality of power transfer systems distributed within the region, a power surface density of the region

1008

Controlling, based on the predicted power surface density of the region, a direction of power transfer of at least one of the plurality of power transfer systems

1000

1010

## Fig. 11

1100

**1102** — Receive sensor data from grid power generators and grid power consumers

**1104** — Determine, using the sensor data, a net grid power availability

**1106** — Is net power availability non-zero?
- No → (loops back to 1102)
- Yes → 1108

**1108** — Access the model and predict power surface density for the region at the current time

**1110** — Is net power availability positive?
- No → 1112
- Yes → 1120

**1112** — Is net power availability more than predicted undersupply threshold?
- Yes → 1114
- No → 1116

**1114** — Based on the predicted power surface density, set direction of power transfer of one or more WTP systems in the region to V2G

**1116** — Identify external power providers

**1118** — Configure the grid for receiving power from the external power providers

**1120** — Is net power availability less than predicted oversupply threshold?
- No → 1124
- Yes → 1122

**1122** — Based on the predicted power surface density, set direction of power transfer of one or more WTP systems in the region to G2V

**1124** — Identify external power receivers

**1126** — Configure the grid for providing power to the external power receivers

EP 4 707 028 A1

Europäisches
Patentamt
European
Patent Office
Office européen
des brevets

# EUROPEAN SEARCH REPORT

**Application Number**

EP 24 19 8770

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/046454 A1 (HOLMES JOHN [US]) 16 February 2023 (2023-02-16) * paragraphs [0015], [0017], [0018], [0021], [0022] - [0029], [0031] - [0039], [0041] - [0045]; figures 1-6 * | 1-15 | INV. B60L1/00 B60L53/12 B60L53/62 B60L53/63 B60L53/66 |
| X | US 2023/024900 A1 (AYOOLA FOLASADE [US] ET AL) 26 January 2023 (2023-01-26) | 1-4,6-15 | B60L53/67 B60L53/68 |
| Y | * paragraphs [0068] - [0167]; figures 1-21 * | 5 | B60L55/00 H02J1/14 H02J3/14 |
| X | US 2021/003974 A1 (YANG WEIWEI [US] ET AL) 7 January 2021 (2021-01-07) | 1-4,6-15 | |
| Y | * paragraphs [0066], [0077] - [0111], [0127] - [0161], [0167] - [0170], [0173] - [0175], [0183] - [0185]; figures 1, 4-9, 23-26A, 28A, 29, 30, 33 * | 5 | |
| X | US 2024/286523 A1 (SAEKI TAKASHI [JP] ET AL) 29 August 2024 (2024-08-29) | 1-4,6-15 | |
| Y | * paragraphs [0013] - [0056], [0062] - [0068]; figures 1, 2, 4 * | 5 | **TECHNICAL FIELDS SEARCHED (IPC)** B60L |
| Y | US 2017/136888 A1 (RICCI CHRISTOPHER P [US]) 18 May 2017 (2017-05-18) | 5 | |
| A | * the whole document * | 1-4,6-15 | |

The present search report has been drawn up for all claims

| Place of search | Date of completion of the search | Examiner |
|---|---|---|
| The Hague | 25 February 2025 | Bronski, Bartlomiej |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 8770

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2025

| Patent document cited in search report | | Publication date | Patent family member(s) | | Publication date |
|---|---|---|---|---|---|
| US 2023046454 | A1 | 16-02-2023 | NONE | | |
| US 2023024900 | A1 | 26-01-2023 | NONE | | |
| US 2021003974 | A1 | 07-01-2021 | EP | 3973607 A1 | 30-03-2022 |
| | | | US | 2021003974 A1 | 07-01-2021 |
| | | | WO | 2021002966 A1 | 07-01-2021 |
| US 2024286523 | A1 | 29-08-2024 | JP | 7589271 B2 | 25-11-2024 |
| | | | JP | 2024116050 A | 27-08-2024 |
| | | | US | 2024286523 A1 | 29-08-2024 |
| US 2017136888 | A1 | 18-05-2017 | US | 2017136888 A1 | 18-05-2017 |
| | | | US | 2017136889 A1 | 18-05-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9561730 B2
- US 48683023 A
- US 11394253 B
- US 9971353 B
- US 10343537 B